# EUROPEAN PATENT APPLICATION

(11) **EP 4 432 142 A1**
(43) Date of publication of application: **18.09.2024**
(21) Application number: 21964022.4
(22) Date of filing: 11.11.2021
(51) Int. Cl.: G06F 21/32

(54) **AUTHENTICATION DEVICE, ENGINE GENERATION DEVICE, AUTHENTICATION METHOD, ENGINE GENERATION METHOD, AND RECORDING MEDIUM**

(71) Applicant: NEC Corporation, 108-8001 Tokyo (JP)
(72) Inventor: NAKAYAMA, Masatoshi, Tokyo 108-8001 (JP); MURATA, Kazuhito, Tokyo 108-8001 (JP); ISHIKAWA, Masumi, Tokyo 108-8001 (JP)
(74) Representative: Betten & Resch
(86) International application number: PCT/JP2021/041473
(87) International publication number: WO 2023/084667

(57) **Abstract**

An authentication apparatus includes: an authentication unit that authenticates a target person, by using a person image generated by a visible camera imaging the target person at a first time; and a determination unit that determines whether or not the target person is a living body, by using a plurality of thermal images generated by a thermal camera imaging the target person at a second time closest the first time, and a third time before and / or after the second time, of a plurality of times when the thermal camera images the target person.

## Description

### Technical Field

This disclosure relates, for example, to technical fields of an authentication apparatus, an authentication method, and a recording medium that are configured to authenticate a target person included in a person image, and an engine generation apparatus, an engine generation method, and a recording medium that are configured to generate a decision engine capable of determining whether or not the target person included in the person image is a living body.

### Background Art

Patent Literature 1 describes an example of an authentication apparatus that is configured to authenticate a target person that is included in a person image. Patent Literature 1 describes an apparatus that authenticates the target person by using a face image of the target person acquired from a camera, and that determines whether or not the target person is a living body by using a temperature distribution of a face of the target person acquired from thermography.

In addition, as prior art documents related to this disclosure, Patent Literature 2 to Patent Literature 5 are cited.

### Citation List

### Patent Literature

Patent Literature 1: JP2005-115460A
Patent Literature 2: JP2014-078052A
Patent Literature 3: JP2011-067371A
Patent Literature 4: International Publication No. WO2009/107237 pamphlet
Patent Literature 5: JP2005-259049A

### Summary

### Technical Problem

It is an example object of this disclosure to provide an authentication apparatus, an engine generation apparatus, an authentication method, an engine generation method, and a recording medium that are intended to improve the techniques/technologies described in Citation List.

### Solution to Problem

An authentication apparatus according to an example aspect of this disclosure includes: an authentication unit that authenticates a target person, by using a person image generated by a visible camera imaging the target person at a first time; and a determination unit that determines whether or not the target person is a living body, by using a plurality of thermal images generated by a thermal camera imaging the target person at a second time closest the first time, and a third time before and / or after the second time, of a plurality of times when the thermal camera images the target person

An engine generation apparatus according to an example aspect of this disclosure is an engine generation apparatus that generates a decision engine for determining whether or not a target person is a living body by using a thermal image generated by a thermal camera imaging the target person, the engine generation apparatus including: an extraction unit that extracts at least one sample image as an extracted image from a learning data set including a plurality of sample images in which an attention area is set, the attention area indicating a body surface temperature distribution of a sample person, the attention area being to be noted to determine whether or not the sample person is a living body; an image generation unit that generates a learning image by changing a positional relation between the attention area set in the extracted image and an attention part of the sample person to be noted to determine whether or not the sample person is a living body, on the basis of an imaging environment in which the thermal camera images the target person; and an engine generation unit that generates the decision engine by performing machine learning using the learning image.

An authentication method according to an example aspect of this disclosure includes: authenticating a target person, by using a person image generated by a visible camera imaging the target person at a first time; and determining whether or not the target person is a living body, by using a plurality of thermal images generated by a thermal camera imaging the target person at a second time closest the first time, and a third time before and / or after the second time, of a plurality of times when the thermal camera images the target person.

An engine generation method according to an example aspect of this disclosure is an engine generation method that generates a decision engine for determining whether or not a target person is a living body by using a thermal image generated by a thermal camera imaging the target person, the engine generation method including: extracting at least one sample image as an extracted image from a learning data set including a plurality of sample images in which an attention area is set, the attention area indicating a body surface temperature distribution of a sample person, the attention area being to be noted to determine whether or not the sample person is a living body; generating a learning image by changing a positional relation between the attention area set in the extracted image and an attention part of the sample person to be noted to determine whether or not the sample person is a living body, on the basis of an imaging environment in which the thermal camera images the target person; and generating the decision engine by performing machine learning using the learning image.

A recording medium according to an example aspect of this disclosure is a recording medium on which a computer program that allows a computer to execute an authentication method is recorded, the authentication method including: authenticating a target person, by using a person image generated by a visible camera imaging the target person at a first time; and determining whether or not the target person is a living body, by using a plurality of thermal images generated by a thermal camera imaging the target person at a second time closest the first time, and a third time before and / or after the second time, of a plurality of times when the thermal camera images the target person.

A recording medium according to another example aspect of this disclosure is a recording medium on which recorded is a computer program that allows a computer to execute an engine generation method that generates a decision engine for determining whether or not a target person is a living body by using a thermal image generated by a thermal camera imaging the target person, the engine generation method including: extracting at least one sample image as an extracted image from a learning data set including a plurality of sample images in which an attention area is set, the attention area indicating a body surface temperature distribution of a sample person, the attention area being to be noted to determine whether or not the sample person is a living body; generating a learning image by changing a positional relation between the attention area set in the extracted image and an attention part of the sample person to be noted to determine whether or not the sample person is a living body, on the basis of an imaging environment in which the thermal camera images the target person; and generating the decision engine by performing machine learning using the learning image.

### Brief Description of Drawings

[FIG. 1] FIG. 1 is a block diagram illustrating a configuration of an authentication apparatus according to a first example embodiment.
[FIG. 2] FIG. 2 is a block diagram illustrating a configuration of an engine generation apparatus according to a second example embodiment.
[FIG. 3] FIG. 3 is a block diagram illustrating a configuration of an authentication system in a third example embodiment.
[FIG. 4] FIG. 4 is a block diagram illustrating a configuration of an authentication apparatus according to the third example embodiment.
[FIG. 5] FIG. 5 is a flowchart illustrating a flow of an authentication operation performed by the authentication apparatus in the third example embodiment.
[FIG. 6] FIG. 6 illustrates an example of a person image.
[FIG. 7] FIG. 7 is a timing chart illustrating a relation between an authentication time and an attention time (especially, a nearest time).
[FIG. 8] FIG. 8 illustrates a relation between a face area of the person image and an attention area of a thermal image.
[FIG. 9] FIG. 9 is a timing chart illustrating a relation between an authentication time and an attention time (especially, a prior/posterior time) in a first modified example.
[FIG. 10] FIG. 10 illustrates a relation between the face area of the person image and the attention area of the thermal image.
[FIG. 11] FIG. 11 is a flowchart illustrating a flow of an authentication operation in a second modified example.
[FIG. 12] FIG. 12 illustrates how the attention area moves in the thermal image.
[FIG. 13] Each of FIG. 13A and FIG. 13B is a graph illustrating a temperature distribution in a pixel row of the thermal image.
[FIG. 14] FIG. 14 illustrates a plurality of thermal images corresponding respectively to a plurality of attention times.
[FIG. 15] FIG. 15 is a block diagram illustrating a configuration of an authentication in a fourth example embodiment.
[FIG. 16] FIG. 16 is a block diagram illustrating a configuration of an engine generation apparatus in the fourth example embodiment.
[FIG. 17] FIG. 17 is a flowchart illustrating a flow of an engine generation operation performed by an engine generation apparatus in the fourth example embodiment.
[FIG. 18] FIG. 18 illustrates an example of a data structure of a learning data set.
[FIG. 19] FIG. 19A and FIG. 19B illustrate an example of a learning image generated from an extracted image.
[FIG. 20] FIG. 20A and FIG. 20B illustrate an example of the learning image generated from the extracted image.
[FIG. 21] FIG. 21 illustrates an example of the learning image.

### Description of Example Embodiments

Hereinafter, an authentication apparatus, an engine generation apparatus, an authentication method, an engine generation method, and a recording medium according to example embodiments will be described.

### (1) First Example embodiment

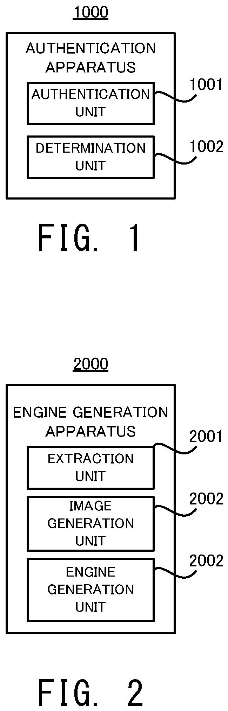

First, an authentication apparatus, an engine generation apparatus, an authentication method, an engine generation method, and a recording medium according to a first example embodiment will be described. With reference to FIG. 1, the following describes the authentication apparatus, the authentication method, and the recording medium according to the first example embodiment will be described, by using an authentication apparatus 1000 to which the authentication apparatus, the authentication method, and the recording medium according to the first example embodiment are applied. FIG. 1 is a block diagram illustrating a configuration of the authentication apparatus 1000 in the first example embodiment.

As illustrated in FIG. 1, authentication apparatus 1000 includes an authentication unit 1001 and a determination unit 1002. The authentication unit 1001 authenticates a target person, by using a person image generated by a visible camera imaging the target person at a first time. The determination unit 1002 determines whether or not the target person is a living body, by using a plurality of thermal images generated by a thermal camera imaging the target person at a second time closest to the first time, and at a third time before and / or after the second time, of a plurality of times when the thermal camera images the target person.

According to the authentication apparatus 1000, it is possible to determine whether or not the target person is a living body with higher accuracy, as compared with an authentication apparatus in a comparative example that determines whether or not the target person is a living body, without considering the first time when the visible camera images the target person.

### (2) Second Example Embodiment

Next, an authentication apparatus, an engine generation apparatus, an authentication method, an engine generation method, and a recording medium according to a second example embodiment will be described. With reference to FIG. 2, the following describes the engine generation apparatus, the engine generation method, and the recording medium according to the second example embodiment, by using an engine generation apparatus 2000 to which the engine generation apparatus, the engine generation method, and the recording medium according to the second example embodiment are applied. FIG. 2 is a block diagram illustrating a configuration of the engine generation apparatus 2000 in the second example embodiment.

The engine generation apparatus 2000 is an apparatus that is configured to generate a decision engine for determining whether or not the target person is a living body, by using the thermal image generated by the thermal camera imaging the target person. The decision engine may be used, for example, by the authentication apparatus that determines whether or not the target person is a living body by using the thermal image.

In order to generate the decision engine, the engine generation apparatus 2000 includes, as illustrated in FIG. 2, an extraction unit 2001, an image generation unit 2002, and an engine generation unit 2003. The extraction unit 2001 extracts at least one sample image as an extracted image, from a learning data set including a plurality of sample images in which an attention area is set, wherein the attention area indicates a body surface temperature distribution of a sample person and is to be noted to determine whether or not the sample person is a living body. The image generation unit 2002 generates a learning image by using the extracted image. Specifically, the image generation unit 2002 generates the learning image, by changing a positional relation between the attention area set in the extracted image and an attention part of the sample person to be noted to determine whether or not the sample person is a living body, on the basis of an imaging environment in which the thermal camera images the target person. The engine generation unit 2003 generates the decision engine by performing machine learning using the learning image.

According to the engine generation apparatus 2000 as described above, it is possible to generate the decision engine capable of determining whether or not the target person is a living body with high accuracy. Specifically, the learning image reflects information about the imaging environment in which the thermal camera images the target person. Therefore, the engine generation apparatus 2000 is allowed to generate the decision engine that reflects the information about the imaging environment, by performing machine learning using the learning image that reflects the information about the imaging environment. For example, the engine generation apparatus 2000 is allowed to generate a decision engine ENG for determining whether or not the target person is a living body by using the thermal image generated by the thermal camera imaging the target person under a particular imaging environment, by performing machine learning using a learning image that reflects information about the particular imaging environment. Consequently, the authentication apparatus is allowed to determine whether or not the target person is a living body with high accuracy, from the thermal image generated by the thermal camera imaging the target person under the particular imaging environment, by using the decision engine that reflects information about the particular imaging environment, as compared with a case of using the decision engine that does not reflect the information about the particular imaging environment. As described above, the engine generation apparatus 2000 is configured to generate the decision engine capable of determining whether or not the target person is a living body with high accuracy.

### (3) Third Example Embodiment

Next, an authentication apparatus, an engine generation apparatus, an authentication method, an engine generation method, and a recording medium according to a third example embodiment will be described. The following describes the authentication apparatus, the authentication method, and the recording medium according to the third example embodiment, by using an authentication system SYS3 to which the authentication apparatus, the authentication method, and the recording medium according to the third example embodiment are applied.

### (3-1) Configuration of Authentication System SYS3

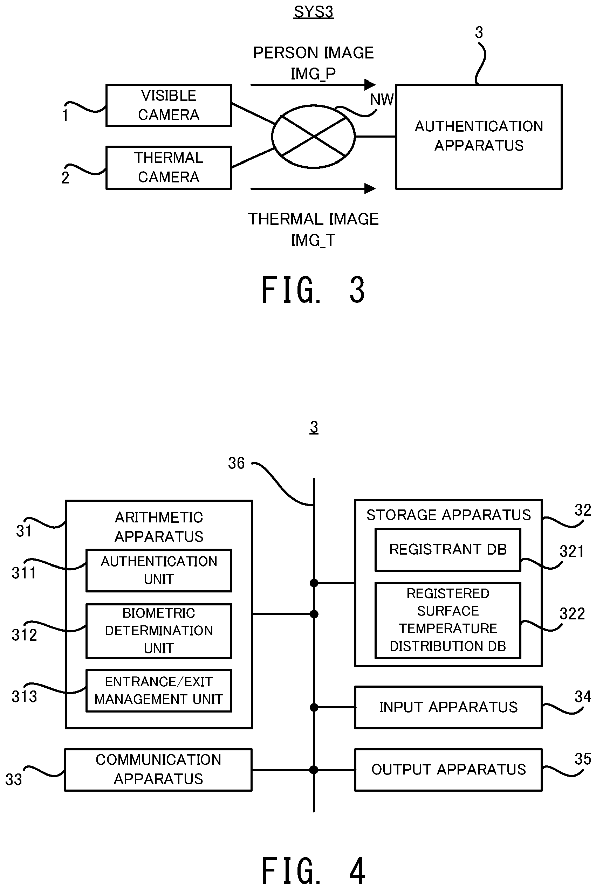

First, a configuration of the authentication system SYS3 in the third example embodiment will be described with reference to FIG. 3. FIG. 3 is a block diagram illustrating the configuration of the authentication system SYS3 in the third example embodiment.

As illustrated in FIG. 3, the authentication system SYS3 includes a visible camera 1, a thermal camera 2, and an authentication apparatus 3. The visible camera 1 and the authentication apparatus 3 may be configured to communicate with each other through a communication network NW. Thermal camera 2 and the authentication apparatus 3 may be configured to communicate with each other through the communication network NW. The communication network NW may include a wired communication network. The communication network NW may include a wireless communication network.

The visible camera 1 is an imaging apparatus that is configured to optically image the target person located in an imaging range of the visible camera 1. Especially, the visible camera 1 is an imaging apparatus that is configured to optically image the target person by detecting a visible light from the target person. The visible camera 1 images the target person, thereby to generate a person image IMG_P indicating the target person imaged by the visible camera 1. The person image IMG_P indicating the target person, is typically an image in which a target person P is included. Note that the "person image IMG_P in which the target person is included" may include an image generated by the visible camera 1 imaging the target person who does not have an intention of wanting to be imaged by the visible camera 1. The "person image IMG_P in which the target person is included" may include an image generated by the visible camera 1 imaging the target person who has an intention of wanting to be imaged by the visible camera 1. The visible camera 1 transmits the generated person image IMG_P to the authentication apparatus 3 through the communication network NW.

Thermal camera 2 is an imaging apparatus that is configured to image the target person located in an imaging range of thermal camera 2. Thermal camera 2 images the target person, thereby to generate a thermal image IMG_T indicating a body surface temperature distribution of the target person imaged by the thermal camera 2. The thermal image IMG_T may be an image indicating the body surface temperature distribution of the target person by color or gradation. The thermal image IMG_T indicating the body surface temperature of the target person, is typically an image in which the target person P is substantially included by the body surface temperature distribution of the target person. Note that the "thermal image IMG_T in which the target person is included" may include an image generated by the thermal camera 2 imaging the target person who does not have an intention of wanting to be imaged by the thermal camera 2. The "thermal image IMG_T in which the target person is included" may include an image generated by the thermal camera 2 imaging the target person who has an intention of wanting to be imaged by the thermal camera 2. Thermal camera 2 transmits the generated thermal image IMG_T to the authentication apparatus 3 through the communication network NW.

The visible camera 1 and the thermal camera 2 are aligned such that the visible camera 1 and the thermal camera 2 are allowed to image the same target person. That is, the visible camera 1 and the thermal camera 2 are aligned such that imaging range of the visible camera 1 and the imaging range of thermal camera 2 overlap at least partially. For this reason, the target person included in the person image IMG_P generated by the visible camera 1 in a certain time zone, is included in the thermal image IMG_T generated by the thermal camera 2 in the same time zone. That is, the same target person is included in the person image IMG_P generated by the visible camera 1 and the thermal image IMG_T generated by the thermal camera 2 in a certain time zone.

The authentication apparatus 3 acquires the person image IMG_P from the visible camera 1. The authentication apparatus 3 performs an authentication operation for authenticating the target person included in the person image IMG_P, by using the acquired person image IMG_P. That is, the authentication apparatus 3 determines whether or not the target person included in the person image IMG_P is the same as a previously registered person (hereinafter referred to as a "registrant"), by using the acquired person image IMG_P.When it is determined that the target person included in the person image IMG_P is the same as the registrant, the authentication of the target person is determined to be successful. On the other hand, when it is determined that target person included in the person image IMG_P is not the same as the registrant, the authentication of the target person is determined to be failed.

Here, in order to impersonate the registrant, there is a possibility that a malicious person makes the visible camera 1 capture an image in which the registrant is included (e.g., a photograph in which the image is printed, or a display in which the image is displayed). In this case, the authentication apparatus 3 possibly determines that the authentication of the target person is successful, as in the case where there is the registrant in front of the visible camera 1, even though there is no registrant in front of the visible camera 1. That is, the malicious person possibly impersonates the registrant. Therefore, as a part of the authentication operation, the authentication apparatus 3 determines whether or not the target person included in the person image IMG_P is a living body. Specifically, the authentication apparatus 3 acquires the thermal image IMG_T from the thermal camera 2. The authentication apparatus 3 determines whether or not the target person included in the thermal image IMG_T is a living body, by using the acquired thermal image IMG_T. As described above, the same target person is included in the person image IMG_P generated by the visible camera 1 and the thermal image IMG_T generated by the thermal camera 2 in a certain time zone. Therefore, an operation of determining whether or not the target person included in the thermal image IMG_T is a living body, is equivalent to an operation of determining whether or not the target person included in the person image IMG_P is a living body.

Such an authentication system SYS3 may be used to manage entry/exit of the target person for a restricted area, for example. Specifically, the restricted area is an area in which the target person who satisfies a predetermined entry condition is permitted to enter, but the target person who does not satisfy the predetermined entry condition is not permitted (i.e. is prohibited). In this case, the authentication apparatus 3 may authenticate the target person by determining whether or not the target person included in the person image IMG_P is the same as the person who is permitted to enter the restricted area (e.g., the person registered in advance as the person who satisfies the entry condition). In this case, when the target person is determined to be the same as the person who is permitted to enter the restricted area (i.e., the authentication is successful), the authentication apparatus 3 may permit the target person to enter the restricted area. As an example, the authentication apparatus 3 may set a state of an entry/exit restriction apparatus (e.g., a gate apparatus or a door apparatus) that is allowed to restrict passage of the target person, to be an open state where the target person can pass through the entry/exit restriction apparatus. On the other hand, when the target person is determined not to be the same as the person who is permitted to enter the restricted area (i.e., the authentication is failed), the authentication apparatus 3 may prohibit the target person from entering the restricted area. As an example, the authentication apparatus 3 may set the state of the entry/exit restriction apparatus to a closed state where the target person cannot pass through the entry/exit restriction apparatus. In addition, even when the authentication of the target person is successful, in a case where it is determined that the target person included in the person image IMG_P is not a living body, the authentication apparatus 3 may prohibit the target person from entering the restricted area.

In a case where the authentication system SYS3 is used to manage the entry/exit of the target person for the restricted area, each of the visible camera 1 and the thermal camera 2 may image the target person who is about to enter the restricted area. As an example, each of the visible camera 1 and the thermal camera 2 may be disposed in the vicinity of the entry/exit restriction apparatus to image the target person who is located in the vicinity of the entry/exit restriction apparatus to enter the restricted area. In this instance, each of the visible camera 1 and the thermal camera 2 may image the target person who is moving toward the entry/exit restriction apparatus. Each of the visible camera 1 and the thermal camera 2 may image the target person who is moving toward the visible camera 1 and the thermal camera 2 that are disposed in the vicinity of the entry/exit restriction apparatus. Alternatively, each of the visible camera 1 and the thermal camera 2 may image the target person who stands still in front of the entry/exit restriction apparatus. Each of the visible camera 1 and the thermal camera 2 may image the target person who stands still in front of the visible camera 1 and the thermal camera 2 that are disposed in the vicinity of the entry/exit restriction apparatus.

### (3-2) Configuring the authentication apparatus 3

Next, a configuration of the authentication apparatus 3 will be described with reference to FIG. 4. FIG. 3 is a block diagram illustrating the configuration of the authentication apparatus 3.

As illustrated in FIG. 4, the authentication apparatus 3 includes an arithmetic apparatus 31, a storage apparatus 32, and a communication apparatus 33. Furthermore, the authentication apparatus 3 may include an input apparatus 34 and an output apparatus 35. The authentication apparatus 3, however, may not include at least one of the input apparatus 34 and the output apparatus 35. The arithmetic apparatus 31, the storage apparatus 32, the communication apparatus 33, the input apparatus 34, and the output apparatus 35 may be connected through a data bus 36.

The arithmetic apparatus 31 includes at least one of a CPU (Central Processing Unit), a GPU (Graphics Processing Unit), and a FPGA (Field Programmable Gate Array), for example. The arithmetic apparatus 31 reads a computer program. For example, the arithmetic apparatus 31 may read a computer program stored in the storage apparatus 32. For example, the arithmetic apparatus 31 may read a computer program stored by a computer-readable and non-transitory recording medium, by using a not-illustrated recording medium reading apparatus provided in the authentication apparatus 3. The arithmetic apparatus 31 may acquire (i.e., download or read) a computer program from a not-illustrated apparatus disposed outside the authentication apparatus 3, through the communication apparatus 33 (or another communication apparatus). The arithmetic apparatus 31 executes the read computer program. Consequently, a logical functional block for performing an operation to be performed by the authentication apparatus 3 (e.g., the authentication operation described above) is realized or implemented in the arithmetic apparatus 31. That is, the arithmetic apparatus 31 is allowed to function as a controller for realizing or implementing the logical functional block for performing an operation (in other words, a processing) to be performed by the authentication apparatus 3.

FIG. 4 illustrates an example of the logical functional block realized or implemented in the arithmetic apparatus 31 to perform the authentication operation. As illustrated in FIG. 4, an authentication unit 311, a biometric determination unit 312, and an entry/exit management unit 313 are realized or implemented in the arithmetic apparatus 31.

The authentication unit 311 acquires the person image IMG_P from the visible camera 1 through the communication network NW by using the communication apparatus 33. In addition, the authentication unit 311 determines whether or not the target person included in the person image IMG_P is the same as the registrant by using the acquired person image IMG_P. Information about the registrant may be stored in the storage apparatus 32 as a registrant DB 321.

The biometric determination unit 312 acquires the thermal image IMG_T from the thermal camera 2 through the communication network NW by using the communication apparatus 33. In addition, the biometric determination unit 312 determines whether or not the target person included in the thermal image IMG_T (i.e., the target person included in the person image IMG_P) is a living body, by using the acquired thermal image IMG_T. For example, the biometric determination unit 312 may determine that the target person included in the thermal image IMG_T is a living body, in a case where a degree of similarity between the body surface temperature distribution of the target person included in the thermal image IMG_T and a body surface temperature distribution registered in advance (hereinafter referred to as a "registered body surface temperature distribution") as a body surface temperature distribution of a living body (especially, a human) is higher than a predetermined threshold. Note that this threshold may be a fixed value. Alternatively, the threshold may be variable. For example, the threshold may be changeable by a user of the authentication system SYS3.

Information about the registered body surface temperature distribution may be stored in the storage apparatus 32 as a registered body surface temperature distribution DB 322. The information about the registered body surface temperature distribution may include information about a body surface temperature distribution of a general living body (especially, a human) (e.g., an average body surface temperature distribution of a human). The information about the registered body surface temperature distribution may include information about a body surface temperature distribution of the registrant (i.e., the registrant previously registered in the registration DB 321) used to perform face authentication (i.e., a body surface temperature distribution of a particular human).

The entry/exit manage unit 313 controls the state of the entry/exit restriction apparatus that is configured to restrict the passage of the target person who is about to enter the restricted area, on the basis of a determination result by the authentication unit 311 and a determination result of the biometric determination unit 312.

In a case where the authentication system SYS3 is not used to manage the entry/exit of the target person for the restricted area, the authentication apparatus 3 may not include the entry/exit manage unit 313. Alternatively, even in a case where the authentication system SYS3 is used to manage the entry/exit of the target person for the restricted area, the authentication apparatus 3 may not include the entry/exit manage unit 313.

The storage apparatus 32 is configured to store desired data. For example, the storage apparatus 32 may temporarily store a computer program to be executed by the arithmetic apparatus 31. The storage apparatus 32 may temporarily store data that are temporarily used by the arithmetic apparatus 31 when the arithmetic apparatus 31 executes the computer program. The storage apparatus 32 may store data that are stored by the authentication apparatus 3 for a long time. The storage apparatus 32 may include at least one of a RAM (Random Access Memory), a ROM (Read Only Memory), a hard disk apparatus, a magneto-optical disk apparatus, a SSD (Solid State Drive), and a disk array apparatus. That is, the storage apparatus 32 may include a non-transitory recording medium.

In the third example embodiment, as described above, the storage apparatus 32 stores the registrant DB 321 mainly referred to by the authentication unit 311 in order to authenticate the target person, and the registered body surface temperature distribution DB 322 mainly referred to by the biometric determination unit 312 in order to determine whether or not the target person is a living body.

The communication apparatus 33 is configured to communicate with each of the visible camera 1 and the thermal camera 2, through the communication network NW. In the third example embodiment, the communication apparatus 33 receives (i.e., acquires) the person image IMG_P from the visible camera 1 through the communication network NW. In addition, the communication apparatus 33 receives (i.e., acquires) the thermal image IMG_T from the thermal camera 2 through the communication network NW.

The input apparatus 34 is an apparatus that receives an input of information to the authentication apparatus 3 from an outside of the authentication apparatus 3. For example, the input apparatus 34 may include an operating apparatus (e.g., at least one of a keyboard, a mouse, and a touch panel) that is operable by an operator of the authentication apparatus 3. For example, the input apparatus 34 may include a reading apparatus that is configured to read information recorded as data on a recording medium that can be externally attached to the authentication apparatus 3.

The output apparatus 35 is an apparatus that outputs information to the outside of the authentication apparatus 3. For example, the output apparatus 35 may output information as an image. That is, the output apparatus 35 may include a display apparatus (a so-called display) that is configured to display an image indicating the information that is desirably outputted. For example, the output apparatus 35 may output information as audio. That is, the output apparatus 35 may include an audio apparatus (a so-called speaker) that is configured to output the audio. For example, the output apparatus 35 may output information onto a paper surface. That is, the output apparatus 35 may include a print apparatus (a so-called printer) that is configured to print desired information on the paper surface.

### (3-3) Authentication Operation Performed by Authentication Apparatus 3

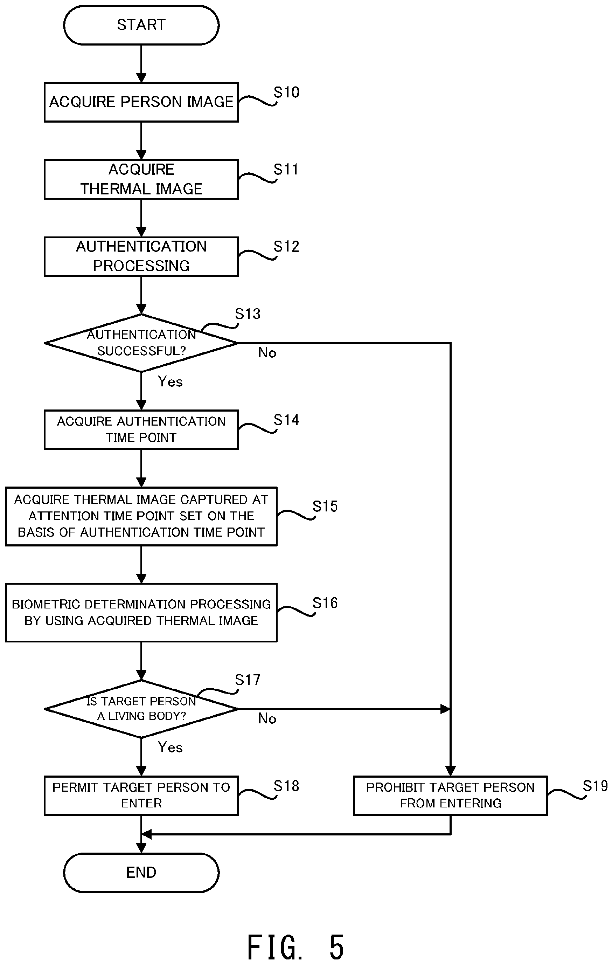

Next, with reference to FIG. 5, a flow of the authentication operation performed by the authentication apparatus 3 will be described. FIG. 5 is a flowchart illustrating the flow of the authentication operation performed by the authentication apparatus 3.

As illustrated in FIG. 5, the communication apparatus 33 acquires the person image IMG_P from the visible camera 1 through the communication network NW (step S10). The visible camera 1 usually continues to image the imaging range at a constant imaging rate. For example, the visible camera 1 continues to image the imaging range at an imaging rate at which the imaging range is imaged N1 times per second (where N1 is an integer of 1 or more). For this reason, the communication apparatus 33 may acquire a plurality of person images IMG_P that are time series data. The plurality of person images IMG_P acquired by the communication apparatus 33 may be stored in the storage apparatus 32.

Furthermore, the communication apparatus 33 acquires the thermal image IMG_T from the thermal camera 2 through the communication network NW (step S11). The thermal camera 2 usually continues to image the imaging range at a constant imaging rate. For example, the thermal camera 2 continues to image the imaging range at an imaging rate at which the imaging range is imaged N2 times per second (where N2 is an integer of 1 or more). Therefore, the communication apparatus 33 may acquire a plurality of thermal images IMG_T that are time series data. The plurality of thermal images IMG_T acquired by the communication apparatus 33 may be stored in the storage apparatus 32.

When the person image IMG_P is acquired in the step S11, the authentication unit 311 authenticates the target person included in the person image IMG_P, by using the person image IMG_P acquired in the step S10 (step S12). The third example embodiment describes an example in which the authentication unit 311 authenticates the target person by using a face of the target person. That is, described is an example in which the authentication unit 311 performs the face authentication. The authentication unit 311, however, may authenticate the target person, by using another authentication method using the person image IMG_P.For example, authentication unit 311 may authenticate the target person by using an iris of the target person.

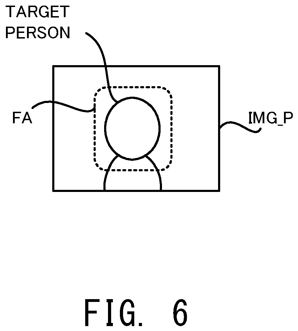

In order to perform the face authentication, the authentication unit 311 detects a face area FA of the person image IMG_P in which the face of the target person is included, as illustrated in FIG. 6 illustrating an example of the person image IMG_P.Thereafter, the authentication unit 311 may extract a feature quantity of the face of the target person included in the face area FA. Thereafter, the authentication unit 311 may calculate a degree of similarity between the feature quantity of the face of the target person included in the face area FA and a feature quantity of a face of the registrant. When the degree of similarity between the feature quantity of the face of the target person and the feature quantity of the face of the registrant is higher than a predetermined authentication threshold, the authentication unit 311 may determine that the target person is the same as the registrant. When the degree of similarity between the feature quantity of the face of the target person and the feature quantity of the face of the registrant is lower than the predetermined authentication threshold, the authentication unit 311 may determine that the target person is not the same as the registrant.

Referring back to FIG. 5, as a result of the authentication in the step S12, when the authentication is not successful (i.e., when the target person is determined not to be the same as the registrant) (the step S13: No), the entry/exit manage unit 313 prohibits the target person from entering the restricted area (step S19).

On the other hand, as a result of the authentication in the step S12, when the authentication is successful (i.e., when the target person is determined to be the same as the registrant) (the step S13: Yes), subsequently, the biometric determination unit 312 determines whether or not the target person who is determined to be the same as the registrant in the step S12, is a living body (step S14 to step S16).

Specifically, the biometric determination unit 312 acquires an authentication time ta (step S14). The authentication time ta indicates a time of capturing one person image IMG_P actually used to authenticate the target person in the step S12, of the person images IMG_P acquired in the step S10. That is, the authentication time ta indicates a time of capturing one person image IMG_P from which extracted is such a feature quantity that the degree of similarity with the feature quantity of the face of the registrant is determined to be higher than the predetermined authentication threshold, from among the plurality of person images IMG_P acquired in the step S10.

Thereafter, the biometric determination unit 312 acquires the thermal image IMG_T captured at an attention time tb that is set on the basis of the authentication time ta acquired in the step S14, from among a plurality of thermal images IMG_T acquired in the step S11 (step S15). In other words, the biometric determination unit 312 acquires the thermal image IMG_T captured at the attention time tb that is at least one of a plurality of times of respectively capturing the plurality of thermal images IMG_T acquired in the step S11 (step S15). The plurality of thermal images IMG_T acquired in the step S11 are stored in the storage apparatus 32, for example. In this instance, the biometric determination unit 312 may acquire the thermal image IMG_T captured at the attention time tb, from the storage apparatus 32.

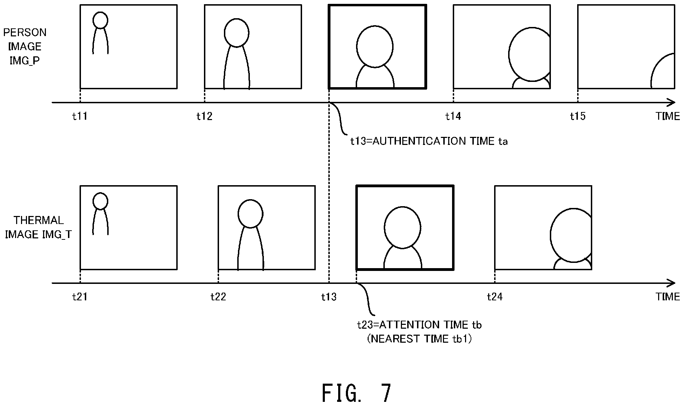

In the third example embodiment, the attention time tb includes a nearest time tb1 closest to the authentication time ta, of the plurality of times of respectively capturing the plurality of thermal images IMG_T acquired in the step S 11. Hereinafter, a specific example of the attention time tb (especially, the nearest time tb1) that is set on the basis of the authentication time ta, will be described with reference to FIG. 7. FIG. 7 is a timing chart illustrating a relation between the authentication time ta and the attention time tb (especially, the nearest time tb1).

In the example illustrated in FIG. 7, the visible camera 1 images the target person at each of a time t11, a time t12, a time t13, a time t14, and a time t15. In addition, the thermal camera 2 images the target person at each of a time t21, a time t22, a time t23, and a time t24. The visible camera 1 and the thermal camera 2 do not necessarily image the target person in the timing of synchronization with each other. In this case, the time t11, the time t12, the time t13, the time t14, and the time t15 when the visible camera 1 images the target person, are not necessarily synchronized with the time t21, the time t22, the time t23, and time t24 when the thermal camera 2 images the target person.

Here, it is assumed that the authentication unit 311 authenticates the target person, by using the person image IMG_P generated by imaging the target person at the time t13. In this case, the authentication time ta is the time t13. As result, the time t23 closest to the time t13 (i.e., with the smallest difference from the time t13) is the nearest time tb1. Consequently, in the example illustrated in FIG. 7, the biometric determination unit 312 acquires the thermal image IMG_T captured at the time t23 that is the nearest time tb1.

Referring back to FIG. 5, thereafter, the biometric determination unit 312 uses the thermal image IMG_T acquired in the step 15 and determines whether or not the target person included in the thermal image IMG_T is a living body (step S16). Here, as described above, the visible camera 1 and the thermal camera 2 are aligned such that the visible camera 1 and the thermal camera 2 are allowed to image the same target person. For this reason, it is highly likely that the target person included in the person image IMG_P (i.e., the target person who is determined to be the same as the registrant in the step S12) is included in the thermal image IMG_T acquired in the step S15. This is because the thermal image IMG_T acquired in the step S15 is generated by the thermal camera 2 imaging the target person at the attention time tb (especially, the nearest time tb1) that is set on the basis of the authentication time ta. For this reason, an operation of determining whether or not the target person included in the thermal image IMG_T acquired in the step S15 is a living body, is equivalent to an operation of determining whether or not the target person who is determined to be the same as the registrant in the step S12 is a living body.

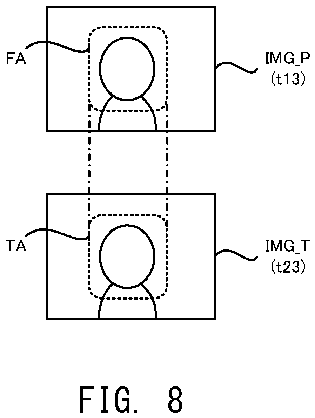

In order to determine whether or not the target person is a living body, the biometric determination unit 312 identifies an area corresponding to the face area FA detected to authenticate the target person, as an attention area TA to be noted to determine whether or not the target person is a living body, in the thermal image IMG_T, as illustrated in FIG. 8. Specifically, as described above, the visible camera 1 and the thermal camera 2 are aligned such that the visible camera 1 and the thermal camera 2 are allowed to image the same target person. That is, the visible camera 1 and the thermal camera 2 are aligned such that the imaging range of the visible camera 1 and the imaging range of the thermal camera 2 overlap at least partially. In this case, a first area in the person image IMG_P and a second area of the thermal image IMG_T in which the same scene as in the first area is included, correspond to each other. For this reason, the biometric determination unit 312 is allowed to identify the attention area TA that correspond to the face area FA in the thermal image IMG_T (i.e., that is assumed to include the same scene as that in the face area FA), from the face area FA of the person image IMG_P, by using a projection transformation matrix based on a positional relation between the visible camera 1 and the thermal camera 2, or the like.

Thereafter, the biometric determination section 312 determines whether or not the target person is a living body, on the basis of a temperature distribution in the attention area TA. Here, since the attention area TA corresponds to the face area FA, it is likely that the face of the target person is included in the attention area TA. For this reason, an operation of determining whether or not the target person is a living body on the basis of the temperature distribution in the attention area TA, is equivalent to an operation of determining whether or not the target person is a living body on the basis of the body surface temperature distribution of the target person (especially, a body surface temperature distribution of the face, which is an example of an attention part of the target person to be noted to determine whether or not the target person is a living body).

As a result of the determination in the step S16, when it is determined that that the target person is not a living body (the step S17: No), the entry/exit manage unit 313 prohibits the target person from entering the restricted area (step S19).

On the other hand, as a result of the determination in the step S16, when it is determined that the target person is a living body (the step S17: Yes), the entry/exit manage unit 313 permits the target person to enter the restricted area (step S 18).

### (3-4) Technical Effect

As described above, in the third example embodiment, the authentication apparatus 3 determines whether or not the target person is a living body, by using the thermal image IMG_T generated by the thermal camera 2 imaging the target person at the attention time tb (especially, the nearest time tb1) that is set on the basis of the authentication time ta. Therefore, the authentication apparatus 3 is capable of determining whether or not the target person is a living body, with higher accuracy, as compared with the authentication apparatus in the comparative example that determines whether or not the target person is a living body by using the thermal image IMG_T generated by the thermal camera 2 imaging the target person at an arbitrary time that does not take into account the authentication time ta.

Specifically, the authentication apparatus in the comparative example is likely to determine whether or not the target person is a living body, by using the thermal image IMG_T generated by the thermal camera 2 imaging the target person at a time that is significantly different from the authentication time ta. There is, however, a possibility that the face of the target person is not included in the attention area TA, in the thermal image IMG_T generated by the thermal camera 2 imaging the target person at the time that is significantly different from the authentication time ta. That is, in a case where the thermal camera 2 images the target person at the time that is significantly different from the authentication time ta, a positional relation between the target person, the visible camera 1 and the thermal camera 2 at the authentication time ta may be different from a positional relation between the target person, the visible camera 1, and the thermal camera 2 at a time when the thermal camera 2 images the target person. This is particularly noticeable when the target person is moving. In this case, there is a possibility that the face of the target person is not properly included in the attention area TA of the thermal image IMG_T that is identified from the face area FA of the person image IMG_P. For example, the face of the target person may be included at a position out of a center of the attention area TA of the thermal image IMG_T. In this case, the authentication apparatus in the comparative example may determine whether or not the target person is a living body, on the basis of a temperature distribution of the attention area ta in which the target person is not properly included (i.e., a temperature distribution that is different from the body surface temperature distribution of the target person) of the thermal image IMG_T. Consequently, in the authentication apparatus in the comparative example, the accuracy of determining whether or not the target person is a living body is likely to deteriorate.

In the third example embodiment, however, the authentication apparatus 3 determines whether or not the target person is a living body, by using the thermal image IMG_T generated by the thermal camera 2 imaging the target person at the nearest time tb1 closest to the authentication time ta when the visible camera 1 images the target person. That is, the authentication apparatus 3 does not determine whether or not the target person is a living body, by using the thermal image IMG_T generated by the thermal camera 2 imaging the target person at the time that is significantly different from the authentication time ta. Consequently, the time when the visible camera 1 images the target person to authenticate the target person (i.e., the authentication time) is close to the time when the thermal camera 2 images the target person to determine whether or not the target person is a living body (i.e., the nearest time tb1). Therefore, there is a high possibility that the face of the target person is properly included in the attention area TA of the thermal image IMG_T that is identified from the face area FA of the person image IMG_P. Therefore, the authentication apparatus 3 is capable of properly determining whether or not the target person is a living body, on the basis of the temperature distribution of the attention area ta in which the target person is properly included (i.e., the body surface temperature distribution of the target person) of the thermal image IMG_T. Consequently, in the authentication apparatus 3, the accuracy of determining whether or not the target person is a living body is unlikely to deteriorate. In other words, the authentication apparatus 3 is capable of determining whether or not the target person is a living body with higher accuracy, as compared with the authentication apparatus in the comparative example.

### (3-5) Modified Examples

Next, a modified example of the authentication apparatus 3 in the third example embodiment will be described. Even in the authentication apparatus 1000 in the first example embodiment, however, the same configuration as that of the modified example described below may be employed.

### (3-5-1) First Modified Example

In the above description, the nearest time tb1 closest to the authentication time ta is used as the attention time tb. In a first modified example, in addition to the nearest time tb1, at least one prior/posterior time tb2, which is a time before and / or after the nearest time tb1, is used as the attention time tb. That is, in the first modified example, the attention time tb may include at least one prior/posterior time tb2, which is a time before and / or after the nearest time tb1, of the plurality of times of respectively capturing the plurality of thermal images IMG_T acquired in the step S11 in FIG. 5, in addition to the nearest time tb1. In this instance, the biometric determination unit 312 acquires a plurality of thermal images IMG_T including the thermal image IMG_T captured at the nearest time tb1 and the thermal image IMG_T captured at the prior/posterior time tb2, in the step S15 in FIG. 5.

Note that the time before and / or after the nearest time tb1 means at least one of a time after the nearest time tb1 and a time before the nearest time tb1. Furthermore, in a case where both the nearest time tb1 and the prior/posterior time tb2 are used as the attention time tb, the nearest time tb1 and at least one prior/posterior time tb2 constitute at least two consecutive times of the plurality of times of respectively imaging the plurality of thermal images IMG_T acquired in the step S11. That is, the thermal image IMG_T captured at the nearest time tb1 and at least two thermal images IMG_T captured at least one prior/posterior time tb2, constitute at least two thermal images IMG_T that are in a temporally continuous relation, of the plurality of thermal images IMG_T acquired in the step S11 in FIG. 5.

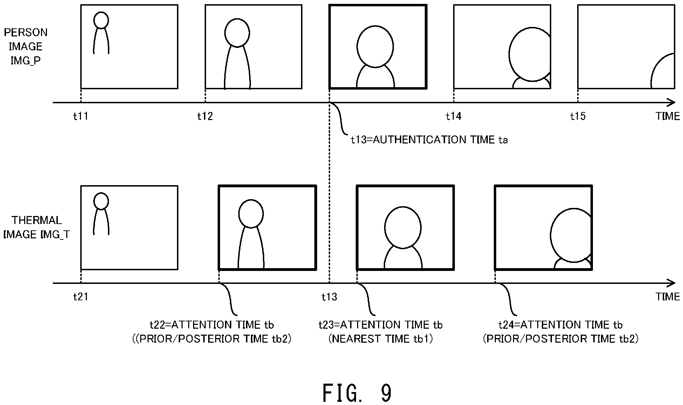

Hereinafter, with reference to FIG. 9, a specific example of the attention time tb (especially, the prior/posterior time tb2) that is set on the basis of the authentication time ta will be described. FIG. 9 is a timing chart illustrating the relation between the authentication time ta and the attention time tb.

In the example illustrated in FIG. 9, as in the example illustrated in FIG. 7, the visible camera 1 images the target person at each of the time t11, the time t12, the time t13, the time t14, and the time t15. In addition, the thermal camera 2 images the target person at each of the time t21, the time t22, the time t23, and the time t24.

Here, it is assumed that the authentication unit 311 authenticates the target person, by using the person image IMG_P generated by imaging the target person at the time t13. In this case, the authentication time ta is the time t13. Consequently, the time t23 closest to the time t13 (i.e., with the smallest difference from the time t13) is the nearest time tb1. Furthermore, the time t22 before the time t23 may be used as the prior/posterior time tb2. In addition, the time t24 after the time t23 may be used as the prior/posterior time tb2.

Consequently, in the example illustrated in FIG. 9, in the step S15 in FIG. 5, the biometric determination unit 312 acquires the thermal image IMG_T captured at the time t23 that is the nearest time tb1. Furthermore, the biometric determination unit 312 acquires at least one of the thermal image IMG_T captured at the time t22 that is the prior/posterior time tb2 and the thermal image IMG_T captured at the time t24 that is the prior/posterior time tb2.

In a case where a plurality of thermal images IMG_T are acquired in the step S15, the biometric determination unit 312 may use at least one of the plurality of thermal images IMG_T acquired in the step S15 and may determine whether or not the target person included in the thermal image IMG_T is a living body, in the step S16 in FIG. 5. Here, even if the plurality of thermal images IMG_T are acquired in the step S15, as in the case where a single thermal image IMG_T is acquired in the step S15, the target person included in the person image IMG_P (i.e., the target person who is determined to be the same as the registrant in the step S12) is likely to be included in each of the plurality of thermal images IMG_T acquired in the step S15. This is because the thermal image IMG_T acquired in the step S15 is generated by the thermal camera 2 imaging the target person at the attention time tb that is set on the basis of the authentication time ta (specifically, at the nearest time tb1 closest to the authentication time ta and at the prior/posterior time tb2). Therefore, the biometric determination unit 312 is allowed to properly determine whether or not the target person is a living body, by using at least one of the plurality of thermal images IMG_T acquired in the step S15.

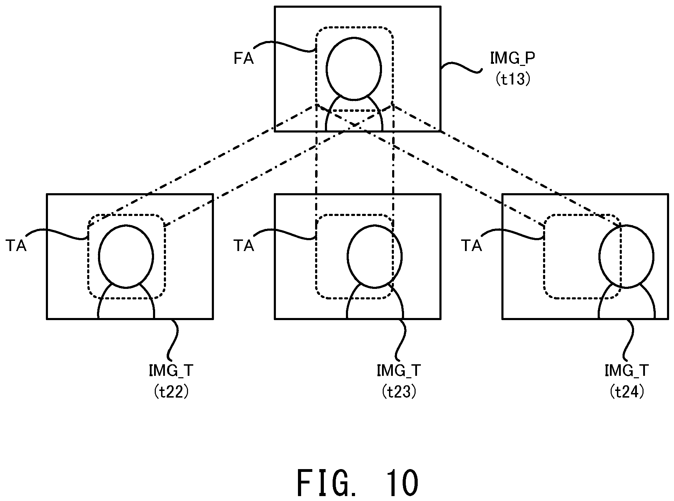

As illustrated in FIG. 10 illustrating a plurality of thermal images IMG_T, however, not all of the plurality of thermal images IMG_T are images in which the face of the target person is properly included in the attention area TA. For example, in the example illustrated in FIG. 10, in the thermal image IMG_T generated by the thermal camera 2 imaging the target person at the time t22 that is the is the prior/posterior time tb2, the face of the target person is properly included near the center of the attention area TA, whereas in the thermal image IMG_T generated by the thermal camera 2 imaging the target person at each of the time t23 that is the nearest time tb1 and the time t24 that is the prior/posterior time tb2, at least a part of the face of the target person is included at a position out of the attention area TA. This is particularly noticeable when the target person is moving. In this instance, the biometric determination unit 312 may select at least one thermal image IMG_T in which the face of the target person is properly included near the center of the attention area TA from among the plurality of thermal images IMG_T, and may use the selected at least one thermal image IMG_T to determine whether or not the target person is a living body. Alternatively, the biometric determination unit 312 may calculate the degree of similarity between the body surface temperature distribution of the target person included in the thermal image IMG_T and the registered body surface temperature distribution, for each of the plurality of thermal images IMG_T, and may use a statistic value of the calculated plurality of degrees of similarity to determine whether or not the target person is a living body. For example, the biometric determination unit 312 may determine that the target person is a living body, in a case where a mean value, a most frequent value, a median value, or a maximum value of the plurality of degrees of similarity is higher than a threshold.

As described above, in the first modified example, the authentication apparatus 3 is allowed to determine whether or not the target person is a living body, by using not only the thermal image IMG_T captured at the nearest time tb1, but also the thermal image IMG_T captured at the prior/posterior time tb2. Therefore, under a situation in which at least a part of the face of the target person is included at a position out of the attention area TA in the thermal image IMG_T captured at the nearest time tb1, the authentication apparatus 3 is capable of determining whether or not the target person is a living body with higher accuracy.

### (3-5-2) Second Modified Example

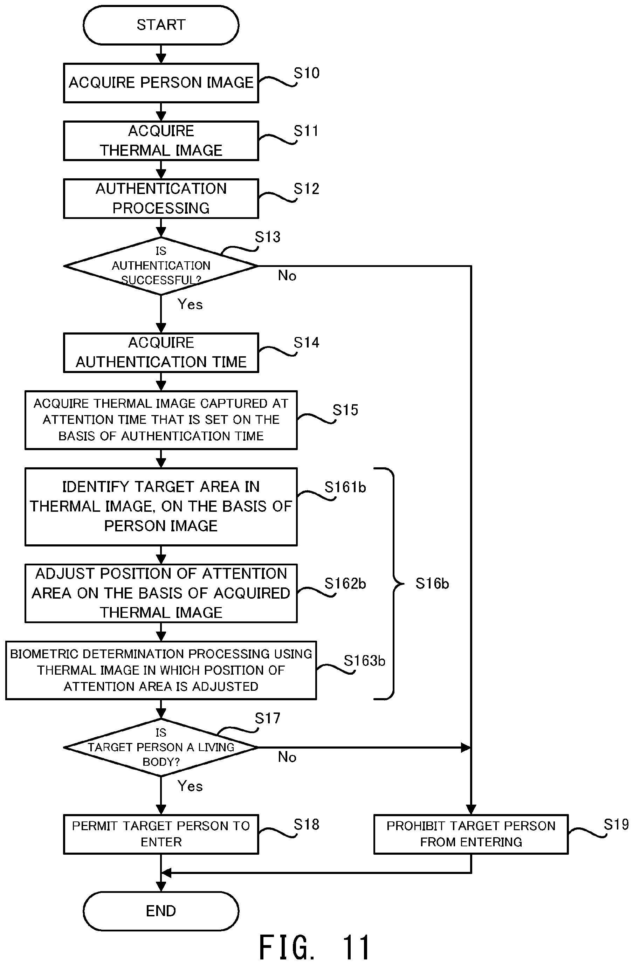

In a second modified example, the authentication apparatus 3 may adjust, in the thermal image IMG_T, a position of the attention area TA that is identified from a position of the face area FA of the person image IMG_P.Hereinafter, with reference to FIG. 11, the authentication operation in the second modified example will be described. FIG. 11 is a flowchart illustrating a flow of the authentication operation in the second modified example. The processing steps described above carry the same step numbers, and a detailed description thereof will be omitted.

As illustrated in FIG. 11, even in the second modified example, the authentication apparatus 3 performs the operation from the step S10 to the step S15.

Thereafter, the biometric determination unit 312 determines whether or not the target person included in the thermal image IMG_T is a living body, by using the thermal image IMG_T acquired in the step S15 (step S16b). Specifically, first, as described above, the biometric determination unit 312 identifies, in the thermal image IMG_T, an area corresponding to the face area FA detected to authenticate the target person, as the attention area TA to be noted to determine whether or not the target person is a living body (step S161b). Thereafter, the biometric determination unit 312 adjusts, in the thermal image IMG_T, the position of the attention area TA that is identified from the position of the face area FA (step S162b). Thereafter, the biometric determination unit 312 determines whether or not the target person is a living body, on the basis of the temperature distribution in the attention area TA whose position is adjusted (step S163b). The processing in the step S161b and the step 163b may be the same as the operation in the step S16 in FIG. 5 described above.

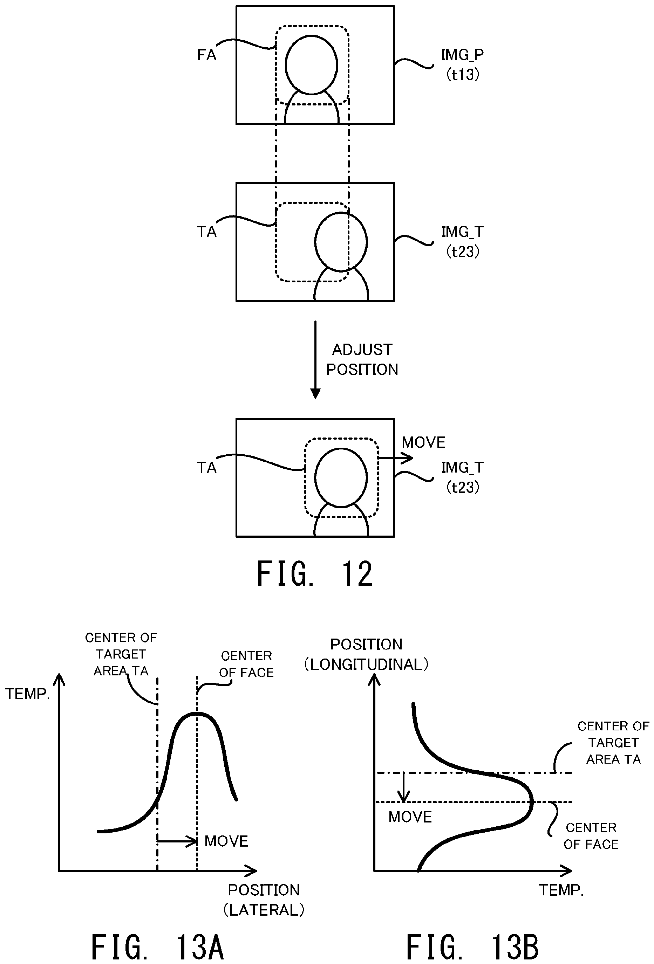

As illustrated in FIG. 12, the biometric determination unit 312 may adjust the position of the attention area TA, by moving the attention area TA in the thermal image IMG_T. For example, the biometric determination unit 312 may move the attention area TA in a longitudinal direction of the thermal image IMG_T, thereby to adjust the position of the attention area TA in the longitudinal direction. For example, the biometric determination unit 312 may move the attention area TA in a lateral direction of the thermal image IMG_T, in addition to or instead of moving the attention area TA in the longitudinal direction of the thermal image IMG_T, thereby to adjust the position of the attention area TA in the lateral direction. FIG. 12 illustrates an example in which the biometric determination unit 312 moves the attention area TA in the lateral direction of the thermal image IMG_T.

The biometric determination unit 312 may adjust the position of the attention area TA on the basis of the thermal image IMG_T acquired in the step S15. For example, the biometric determination unit 312 may adjust the position of the attention area TA on the basis of the temperature distribution indicated by the thermal image IMG_T acquired in the step S15. Specifically, in the thermal image IMG_T, a temperature indicated by an image part where the target person is included, is usually different from a temperature indicated by an image part where the target person is not included (e.g., an image part where a background of the target person is included). For example, the temperature indicated by the image part where the target person is included, is higher than the temperature indicated by the image part where the target person is not included. Therefore, it can be said that the temperature distribution indicated by the thermal image IMG_T indirectly indicates a position where the target person is included, in the thermal image IMG_T. Therefore, the biometric determination unit 312 may adjust the position of the attention area TA such that the attention area TA moves toward the position where the target person is included, in the thermal image IMG_T, on the basis of the thermal image IMG_T acquired in the step S15.

As an example, FIG. 13A illustrates a temperature distribution in a pixel row including a plurality of pixels arranged in a row in the lateral direction, of a plurality of images that constitute the thermal image IMG T, and FIG. 13B illustrates a temperature distribution in a pixel row including a plurality of pixels arranged in a row in the longitudinal direction of the plurality of images that constitute the thermal image IMG_T. As illustrated in FIG. 13A and FIG. 13B, since the temperature indicated by the image part where the target person is included, is different from the temperature indicated by the image part where the target person is not included, it is possible to estimate the position of the target person (e.g., a center of the face) from the temperature distribution of the pixel row. For this reason, the biometric determination unit 312 may calculate the temperature distribution of the pixel row on the basis of the thermal image IMG_T acquired in the step S15, and may adjust the position of the attention area TA such that the attention area TA moves toward the face of the target person in the thermal image IMG_T, on the basis of the temperature distribution of the pixel row. The biometric determination unit 312 may adjust the position of the attention area TA such that the center of the attention area TA moves toward the center of the face of the target person in the thermal image IMG_T. The biometric determination unit 312 may adjust the position of the attention area TA such that the center of the face of the target person matches the center of the attention area TA in the thermal image IMG_T.

As described above, in the second modified example, since the position of the attention area TA is adjustable, the authentication apparatus 3 is allowed to properly determine whether or not the target person is a living body, on the basis of the temperature distribution of the attention area TA in which the target person is properly included (i.e., the body surface temperature distribution of the target person) in the thermal image IMG_T. The authentication apparatus 3 is capable of determining whether or not the target person is a living body with higher accuracy.

### (3-5-3) Third Modified Example

As described in the second modified example, the temperature distribution indicated by the thermal image IMG_T indirectly indicates the position where the target person is included, in the thermal image IMG_T. In this case, the authentication apparatus 3 may determine whether the face of the target person is properly included in the attention area TA, or at least a part of the face of the target person is included at a position out of the attention area TA, in the thermal image IMG_T used to determine whether or not the target person is a living body. When it is determined that at least a part of the face of the target person is included at a position out of the attention area TA, the authentication apparatus 3 may determine whether or not the target person is a living body, by using another thermal image IMG_T in which the face of the target person is properly included in the attention area TA. As an example, the authentication apparatus 3 may determine whether or not the target person is a living body, by using another thermal image IMG_T in which the face of the target person is included at the center of the attention area TA or at a position relatively close to the center.

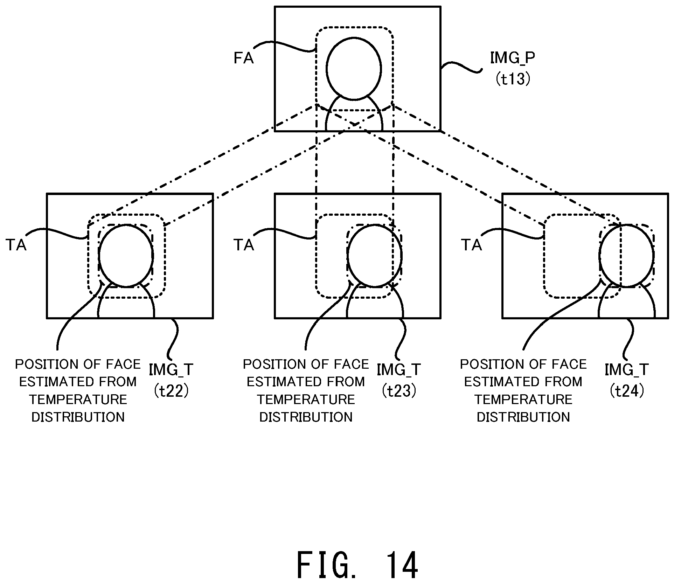

As an example, in the first modified example described above, the authentication apparatus 3 acquires a plurality of thermal images IMG_T respectively corresponding to a plurality of attention times tb. In this instance, the authentication apparatus 3 may determine whether the face of the target person is properly included in the attention area TA, or at least a part of the face of the target person is included at a position out of the attention area TA, in each of the plurality of thermal images IMG_T. In this case, the authentication apparatus 3 may select one thermal image IMG_T in which the face of the target person is properly included in the attention area TA, from among the plurality of thermal images IMG_T, and may use the selected one thermal image IMG_T to determine whether or not the target person is a living body. For example, in the example illustrated in FIG. 14 illustrating the plurality of thermal images IMG_T respectively corresponding to the plurality of attention times tb, in the thermal image IMG_T generated by the thermal camera 2 imaging the target person at the time t22, the face of the target person is properly included in the attention area TA, whereas in the thermal image IMG_T generated by the thermal camera 2 imaging the target person at each of the time t23 and the time t24, at least a part of the face of the target person is included at a position out of the attention area TA. In this case, the authentication apparatus 3 may select the thermal image IMG_T generated by the thermal camera 2 imaging the target person at the time t22, as one thermal image IMG_T in which the face of the target person is properly included in the attention area TA, on the basis of the temperature distribution indicated by the plurality of thermal images IMG_T.

As described above, in the third modified example, the authentication apparatus 3 is allowed to determine whether or not the target person is a living body, by using one thermal image IMG_T in which the face of the target person is properly included in the attention area TA. The authentication apparatus 3 is capable of determining whether or not the target person is a living body with higher accuracy.

### (3-5-4) Fourth Modified Example

In the above description, the authentication apparatus 3 that authenticates the target person included in the person image IMG_P, determines whether or not the target person is a living body, by using the thermal image IMG_T. However, as in the authentication apparatus 3 described above, an arbitrary impersonation determination apparatus that does not authenticate the target person included in the person image IMG_P, may determine whether or not the target person included in the thermal image IMG_T is a living body, by using the thermal image IMG_T. In other words, the arbitrary impersonation determination apparatus may determine whether or not a living body is included in the thermal image IMG_T. Even in this case, as in the authentication apparatus 3, the arbitrary impersonation determination apparatus is capable of determining whether or not the target person is a living body with relatively high accuracy.

As an example, for example, in a facility where the target person who has a normal body surface temperature is permitted to stay, but the target person who does not have a normal body surface temperature is prohibited from staying (e.g., the target person who does not have a normal body surface temperature is required to leave), the thermal camera 2 may be installed to measure the body surface temperature of the target person who stays in the facility. An example of such a facility includes an office building, a public facility, a restaurant, and a hospital. In this case, the facility may be provided with a stay management apparatus that determines whether or not the target person who stays in the facility has a normal body surface temperature, by using the thermal image IMG_T generated by the thermal camera 2 imaging the target person who is about to enter the facility, and that requires the target person whose body surface temperature is not a normal value to leave the facility. As in the authentication apparatus 3 described above, this stay management apparatus may determine whether or not the target person included in the thermal image IMG_T is a living body.

### (4) Fourth Example Embodiment

Next, an authentication apparatus, an engine generation apparatus, an authentication method, an engine generation method, and a recording medium according to a fourth example embodiment will be described. The following describes the authentication apparatus, the engine generation apparatus, the authentication method, the engine generation method, and the recording medium according to the fourth example embodiment, by using an authentication system SYS4 to which the authentication apparatus, the engine generation apparatus, the authentication method, the engine generation method, and the recording medium according to the fourth example embodiment are applied.

### (4-1) Configuration of Authentication System SYS4

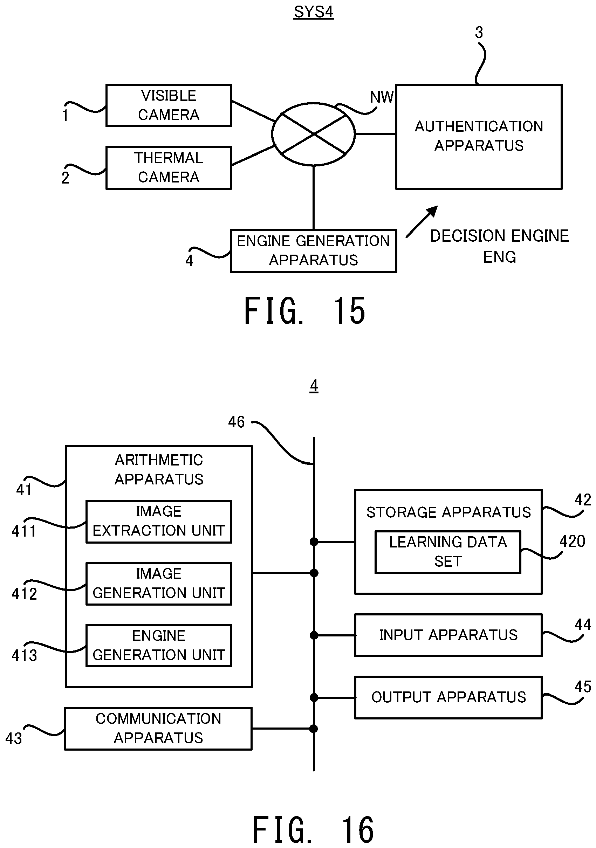

First, a configuration of the authentication system SYS4 in the fourth example embodiment will be described with reference to FIG. 15. FIG. 15 is a block diagram illustrating the configuration of the authentication system SYS4 in the fourth example embodiment. The components already described carry the same reference numerals, and a detailed description thereof will be omitted.

As illustrated in FIG. 15, the authentication system SYS4 in the fourth example embodiment is different from the authentication system SYS3 in the third example embodiment in that the authentication system 4 further includes an engine generation apparatus 4. Other features of the authentication system SYS4 may be the same as those of the authentication system SYS3.

The engine generation apparatus 4 is configured to perform an engine generation operation for generating a decision engine ENG for determining whether or not the target person is a living body by using the thermal image IMG_T. The decision engine ENG may be any engine as long as it is capable of determining whether or not the target person is a living body by using the thermal image IMG_T. For example, the decision engine ENG may be an engine that outputs a result of the determination of whether or not the target person is a living body, on the basis of at least a part of the thermal image IMG_T (e.g., an image part included in the attention area TA of the thermal image IMG_T). For example, the decision engine ENG may be an engine that outputs a result of the determination of whether or not the target person is a living body, when at least a part of the thermal image IMG_T (e.g., an image part included in the attention area TA of the thermal image IMG_T) is inputted. For example, the decision engine ENG may be an engine that outputs a result of the determination of whether or not the target person is a living body, on the basis of a feature quantity of at least a part of the thermal image IMG_T (e.g., an image part included in the attention area TA of the thermal image IMG_T). For example, the decision engine ENG may be an engine that outputs a result of the determination of whether or not the target person is a living body, when the feature quantity of at least a part of the thermal image IMG_T (e.g., an image part included in the attention area TA of the thermal image IMG_T) is inputted.

The fourth example embodiment describes an example in which the engine generation apparatus 4 generates the decision engine ENG by performing machine learning using an image that indicates the body surface temperature distribution of a person, as in the case of the thermal image IMG_T. In this instance, the decision engine ENG is an engine that can be generated by machine learning (a so-called learnable learning model). An example of the engine that can be generated by machine learning is an engine using a neural network (e.g., a learning model).

The engine generation apparatus 4 may transmit the generated decision engine ENG to the authentication apparatus 3 through the communication network NW. In this instance, the authentication apparatus 3 may determine whether or not the target person is a living body, by using the thermal image IMG_T and the decision engine ENG.

### (4-2) Configuration of Engine Generation Apparatus 4

Next, with reference to FIG. 16, a configuration of the engine generation apparatus 4 in the fourth example embodiment will be described. FIG. 16 is a block diagram illustrating the configuration of the engine generation apparatus 4 in the fourth example embodiment.

As illustrated in FIG. 16, the engine generation apparatus 4 includes an arithmetic apparatus 41, a storage apparatus 42, and a communication apparatus 43. The engine generation apparatus 4 may further include an input apparatus 44 and an output apparatus 45. T, the authentication apparatus 3, however, may not include at least one of the input apparatus 44 and the output apparatus 45. The arithmetic apparatus 41, the storage apparatus 42, the communication apparatus 43, the input apparatus 44 and the output apparatus 45 may be connected through a data bus 46.

The arithmetic apparatus 41 includes at least one of a CPU, a GPU, and a FPGA, for example. The arithmetic apparatus 41 reads a computer program. For example, the arithmetic apparatus 41 may read a computer program stored in the storage apparatus 42. For example, the arithmetic apparatus 41 may read a computer program stored by a computer-readable and non-transitory recording medium, by using a not-illustrated recording medium reading apparatus provided in the engine generation apparatus 4. The arithmetic apparatus 41 may acquire (i.e., download or read) a computer program from a not-illustrated apparatus disposed outside the engine generation apparatus 4, through the communication apparatus 43 (or another communication apparatus). The arithmetic apparatus 41 executes the read computer program. Consequently, a logical functional block for performing an operation to be performed by the engine generation apparatus 4 (e.g., the engine generation operation described above) is realized or implemented in the arithmetic apparatus 41. That is, the arithmetic apparatus 41 is allowed to function as a controller for realizing or implementing the logical functional block for performing an operation (in other words, a processing) to be performed by the engine generation apparatus 4.

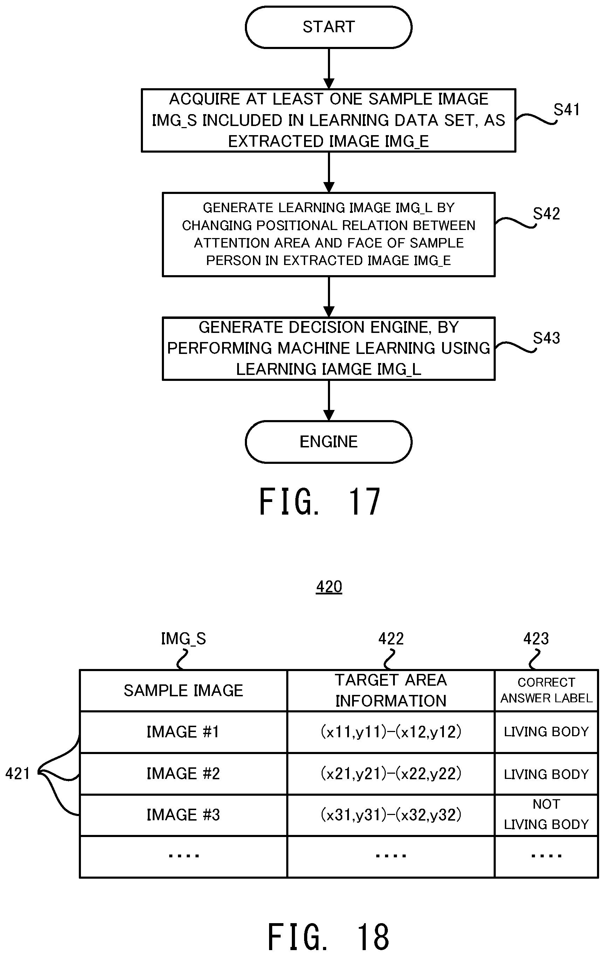

FIG. 16 illustrates an example of the logical functional block realized or implemented in the arithmetic apparatus 41 to perform the engine generation operation. As illustrated in FIG. 16, an image extraction unit 411, an image generation unit 412, and an engine generation unit 413 are realized or implemented in the arithmetic apparatus 41. Since the operation of each of the image extraction unit 411, the image generation unit 412, and the engine producing unit 413 will be described in detail later with reference to FIG. 17 or the like, a detailed description thereof will be omitted.

The storage apparatus 42 is configured to store desired data. For example, the storage apparatus 42 may temporarily store a computer program to be executed by the arithmetic apparatus 41. The storage apparatus 42 may temporarily store data that are temporarily used by the arithmetic apparatus 41 when the arithmetic apparatus 41 executes the computer program. The storage apparatus 42 may store data that are stored by the engine generation apparatus 4 for a long time. The storage apparatus 42 may include at least one of a RAM, a ROM, a hard disk apparatus, a magneto-optical disk apparatus, a SSD, and a disk array apparatus. That is, the storage apparatus 42 may include a non-transitory recording medium.

The communication apparatus 43 is configured to communicate with each of the visible camera 1, the thermal camera 2, and the authentication apparatus 3 through the communication network NW. In the fourth example embodiment, the communication apparatus 43 transmits the generated decision engine ENG to the authentication apparatus 3 through the communication network NW.

The input apparatus 44 is an apparatus that receives an input of information to the engine generation apparatus 4 from an outside of the engine generation apparatus 4. For example, the input apparatus 44 may include an operating apparatus (e.g., at least one of a keyboard, a mouse, and a touch panel) that is operable by an operator of the engine generation apparatus 4. For example, the input apparatus 44 may include a reading apparatus that is configured to read information recorded as data on a recording medium that can be externally attached to the engine generation apparatus 4.

The output apparatus 45 is an apparatus that outputs information to the outside of the engine generation apparatus 4. For example, the output apparatus 45 may output information as an image. That is, the output apparatus 45 may include a display apparatus (a so-called display) that is configured to display an image indicating the information that is desirably outputted. For example, the output apparatus 45 may output information as audio. That is, the output apparatus 45 may include an audio apparatus (a so-called speaker) that is configured to output the audio. For example, the output apparatus 45 may output information onto a paper surface. That is, the output apparatus 45 may include a print apparatus (a so-called printer) that is configured to print desired information on the paper surface.

### (4-3) Engine Generation Operation Performed by Engine Generation Apparatus 4

Next, with reference to FIG. 17, a flow of the engine generation operation performed by the engine generation apparatus 4 will be described. FIG. 17 is a flowchart illustrating the flow of the engine generation operation performed by the engine generation apparatus 4.

As illustrated in FIG. 17, the image extraction unit 411 extracts at least one extracted image IMG_E from a learning data set 420 (step S41). The learning data set 420 may be stored in the storage apparatus 42, for example (see FIG. 16). Alternatively, the image extraction unit 411 may acquire the learning data set 420 from an external apparatus of the engine generation apparatus 4, by using the communication apparatus 43.

An example of a data structure of the learning data set 420 is illustrated in FIG. 18. As illustrated in FIG. 18, the learning data set 420 includes a plurality of unit data 421. Each piece of the unit data 421 includes a sample image IMG_S, attention area information 422, and a correct answer label 423. The sample image IMG_S is an image indicating the body surface temperature distribution of a sample person. For example, an image generated by the thermal camera 2 or another thermal camera that is different from the thermal camera 2, imaging the sample person, may be used as the sample image IMG_S. For example, an imitated image of the image generated by the thermal camera 2 or another thermal camera that is different from the thermal camera 2, imaging the sample person, may be used as the sample image IMG_S. In the fourth example embodiment, the attention area TA is set in advance in the sample image IMG_S. The attention area TA set in the sample image IMG_S is an area to be noted to determine whether or not the sample person is a living body. For example, the attention area TA may be an area including a part (e.g., the face described above) of the sample person to be noted to determine whether or not the sample person is a living body. Information about the attention area TA set in advance in the sample image IMG_S is included in the unit datum 421 as the attention area information 422. The correct answer label 423 indicates whether or not the sample person included in the sample image IMG_S is a living body.

The learning data set 420 may include a plurality of unit data 421 each piece including a plurality of sample images IMG_S respectively indicating body surface temperature distributions of a plurality of different sample persons. The learning data set 420 may include a plurality of unit data 421 each piece including a plurality of sample images IMG_S indicating the body surface temperature distribution of the same sample person.

The image extraction unit 411 may randomly extract at least one sample image IMG_S from the learning data set 420, as the extracted image IMG_E. In this instance, the image extraction unit 411 may extract all the plurality of sample images IMG_S included in the learning data set 420, as the extracted image IMG_E. Alternatively, the image extraction unit 411 may extract a part of the plurality of sample images IMG_S included in the learning data set 420, as the extracted image IMG_E, whereas it may not extract another part of the plurality of sample images IMG_S included in the learning data set 420 as the extracted image IMG_E.

Alternatively, the image extraction unit 411 may extract, from the learning data set 420, at least one sample image IMG_S that satisfies a predetermined extraction condition, as the extracted image IMG_E. The extraction condition may include an imaging environment condition that is set on the basis of an imaging environment in which at least one of the visible camera 1 and the thermal camera 2 images the target person. That is, the extraction condition may include an imaging environment condition that reflects an actual imaging environment in which at least one of the visible camera 1 and the thermal camera 2 images the target person. In this instance, the image extraction unit 411 may extract, from the learning data set 420, at least one sample image IMG_S that satisfies the imaging environment condition, as the extracted image IMG_E. For example, the image extraction unit 411 may extract, from the learning data set 420, the sample image IMG_S having the same properties as those of the thermal image IMG_T generated by the thermal camera 2 in a predetermined imaging environment indicated by the imaging environment, as the extracted image IMG_E. The image extraction unit 411 may extract, from the learning data set 420, the sample image IMG_S having the same properties as those of the thermal image IMG_T generated by the thermal camera 2 that images the target person under the imaging environment indicated by the imaging environmental conditions, as the extracted image IMG_E.

The imaging environment may include the positional relation between the visible camera 1 and the thermal camera 2. The imaging environment may include a positional relation between the visible camera 1 and the target person. Especially, the imaging environment may include the positional relation between the visible camera 1 and the target person in the timing when the visible camera 1 images the target person. The positional relation between the visible camera 1 and the target person may include a distance between the visible camera 1 and the target person. The positional relation between the visible camera 1 and the target person may include a relation between a direction in which the visible camera 1 faces (e.g., a direction in which an optical axis of an optical system, such as a lens provided in the visible camera 1, extends) and a direction in which the target person faces (e.g., a direction in which the face of the target person faces and a direction that extends in front of the target person). The imaging environment may include a positional relation between the thermal camera 2 and the target person. Especially, the imaging environment may include the positional relation between the thermal camera 2 and the target person in the timing when the thermal camera 2 images the target person. The positional relation between the thermal camera 2 and the target person may include a distance between the thermal camera 2 and the target person. The positional relation between the thermal camera 2 and the target person may include a relation between a direction in which the thermal camera 2 faces (e.g., a direction in which an optical axis of an optical system, such as a lens provided in the thermal camera 2, extends) and a direction in which the target person faces. The imaging environment may include optical properties of the visible camera 1 (e.g., optical properties of the optical system, such as a lens provided in the visible camera 1). The imaging environment may include optical properties of the thermal camera 2 (e.g., optical properties of the optical system, such as a lens provided in the thermal camera 2).

Each of the visible camera 1 and the thermal camera 2 may image the target person who is moving toward the visible camera 1 and the thermal camera 2, or may image the target person who stands still in front of the visible camera 1 and the thermal camera 2, as described above. In this case, the imaging environment when the visible camera 1 and the thermal camera 2 image the target person who is moving, is generally different from the imaging environment when the visible camera 1 and the thermal camera 2 images the target person who stands still. Therefore, at least one of the condition that the visible camera 1 and the thermal camera 2 image the target person who is moving, and the condition that the visible camera 1 and the thermal camera 2 image the target person who stands still, may be used as the imaging environmental condition.

A state of the target person included in the thermal image IMG_T varies depending on the imaging environment. For example, the state of the target person included in the thermal image IMG_T generated by imaging the target person who is moving, is generally different from the state of the target person included in the thermal image IMG_T generated by imaging the target person who stands still. Therefore, an operation of extracting at least one extracted image IMG_E that satisfies the imaging environmental condition, may be regarded as equivalent to an operation of extracting, as extracted image IMG_E, the sample image IMG_S including the sample person in the same state as that of the target person included in the thermal image IMG_T generated under a predetermined imaging environment indicated by the imaging environmental condition.

As an example, in a case where the visible camera 1 and the thermal camera 2 image the target person who is moving, the visible camera 1 and the thermal camera 2 are relatively likely to image the target person from a diagonal direction, whereas in a case where the visible camera 1 and the thermal camera 2 image the target person who stands still, the visible camera 1 and the thermal camera 2 are relatively likely to image the target person from a front direction. In this case, a condition that the visible camera 1 and the thermal camera 2 image the target person from the front direction, may be used as the imaging environmental condition that the visible camera 1 and the thermal camera 2 image the target person who stands still. Similarly, a condition that the visible camera 1 and the thermal camera 2 image the target person from the diagonal direction, may be used as the imaging environmental condition that the visible camera 1 and the thermal camera 2 image the target person who is moving. In a case of using the imaging environment condition that the visible camera 1 and the thermal camera 2 image the target person from the front direction, the image extraction unit 411 may extract the sample image IMG_S in which the sample person facing the front is included, as the extracted image IMG_E. In a case of using the imaging environmental condition that the visible camera 1 and the thermal camera 2 image the target person from the diagonal direction, the image extraction unit 411 may extract the sample image IMG_S in which the sample person facing in the diagonal direction is included, as the extracted image IMG_E.

Referring back to FIG. 17, thereafter, the image generation unit 412 generates a learning image IMG_L actually used for machine learning, by using the extracted image IMG_E extracted in the step S41 (step S42). Especially, the image generation unit 412 generates a plurality of learning images IMG_L (step S42). Specifically, the image generation unit 412 changes a positional relation between the attention area TA set in the extracted image IMG_E and a face of the sample person (i.e., an attention part) included in the extracted area IMG_E, thereby generate the learning image IMG_L that is the extracted image IMG_E in which the positional relation between the attention area TA and the face of the sample person is changed.

In a single extracted image IMG_E, the image generation unit 412 may change the positional relation between the attention area TA and the face of the sample person in a plurality of different change aspects. In this case, the image generation unit 412 is allowed to generate, from the single extracted image IMG_E, a plurality of learning images IMG_L in which the change aspects of the positional relation between the attention area TA and the face of the sample person are respectively different. Consequently, the image generation unit 412 is capable of further increasing the number of the learning images IMG_L used for machine learning. This is a great merit for machine learning in which learning efficiency improves as the number of data used for the sample increases.

The image generation unit 412 may change the positional relation between the attention area TA and the face of the sample person, on the basis of the imaging environment in which at least one of the visible camera 1 and the thermal camera 2 described above images the target person. Specifically, the state of the target person included in the thermal image IMG_T varies depending on the imaging environment, as described above. In this instance, the image generation unit 412 may change the positional relation between the attention area TA and the face of the sample person so as to generate the learning image IMG_L including the sample person in the same state as that of the target person included in the thermal image IMG_T generated under an actual imaging environment in which at least one of the visible camera 1 and the thermal camera 2 described above images the target person.

For example, each of the visible camera 1 and the thermal camera 2 may image the target person who is moving toward the visible camera 1 and the thermal camera 2, or may image the target person who stands still in front of the visible camera 1 and the thermal camera 2, as described above. In this instance, the image generation unit 412 may change the positional relation between the attention area TA and the face of the sample person so as to generate the learning image IMG_L including the sample person in the same state as that of the target person included in the thermal image IMG_T generated by the thermal camera 2 imaging the target person who is moving. The image generation unit 412 may change the positional relation between the attention area TA and the face of the sample person so as to generate the learning image IMG_L including the sample person in the same state as that of the target person included in the thermal image IMG_T generated by the thermal camera 2 imaging the target person who stands still.

As an example, in the thermal image IMG_T generated by imaging the target person who is moving, as compared with the thermal image IMG_T generated by imaging the target person who stands still, a deviation between the center of the attention area TA and the center of the face of the target person is likely to increase. For this reason, in a case where the thermal camera 2 images the target person who is moving, the image generation unit 412 may change the positional relation between the attention area TA and the face of the sample person so as to generate the learning image IMG_L in which the deviation between the center of the attention area TA and the center of the face of the sample person is relatively large. On the other hand, in a case where the thermal camera 2 images the target person who stands still, the image generation unit 412 may change the positional relation between the attention area TA and the face of the sample person so as to generate the learning image IMG_L in which the deviation between the center of the attention area TA and the center of the face of the sample person is relatively small.

As another example, in the thermal image IMG_T generated by imaging the target person who is moving, as compared with the thermal image IMG_T generated by imaging the target person who stands still, the face of the target person is likely to be out of the center of the target are TA in more directions. For this reason, in a case where the thermal camera 2 images the target person who is moving, the image generation unit 412 may change the positional relation between the attention area TA and the face of the sample person so as to generate a plurality of learning images IMG_L in which the face of the sample person is out of the center of the attention area TA in a relatively large number of directions. Specifically, the image generation unit 412 may generate a plurality of learning images IMG_L in which the face of the sample person is out of the center of the attention area TA in four different directions (e.g., an upward direction, a downward direction, a right direction, and a left direction). On the other hand, in a case where the thermal camera 2 images the target person who stands still, the image generation unit 412 may change the positional relation between the attention area TA and the face of the sample person so as to generate a plurality of learning images IMG_L in which the face of the sample person is out of the center of the attention area TA in a relatively small number of directions. Specifically, the image generation unit 412 may generate a plurality of learning images IMG_L in which the face of the sample person is out of the center of the attention area TA only in one type of direction or in two types of directions (e.g., an upward direction and a downward direction).

As another example, in a case where the visible camera 1 and the thermal camera 2 image the target person who is moving, the visible camera 1 and the thermal camera 2 may image the target person from a position relatively far from the target person, whereas in a case where the visible camera 1 and the thermal camera 2 image the target person who stands still, the visible camera 1 and the thermal camera 2 may image the target person from a position relatively close to the target person. As the distance between the visible camera 1, the thermal camera 2, and the target person is longer, the face of the target person included in the thermal image IMG_T is smaller. For this reason, in a case where the thermal camera 2 images the target person who is moving, the image generation unit 412 may change the positional relation between the attention area TA and the face of the sample person so as to generate the learning image IMG_L in which the sample person with a relatively small face is included. On the other hand, in a case where the thermal camera 2 images the target person who stands still, the image generation unit 412 may change the positional relation between the attention area TA and the face of the sample person so as to generate the learning image IMG_L in which the sample person with a relatively large face is included.

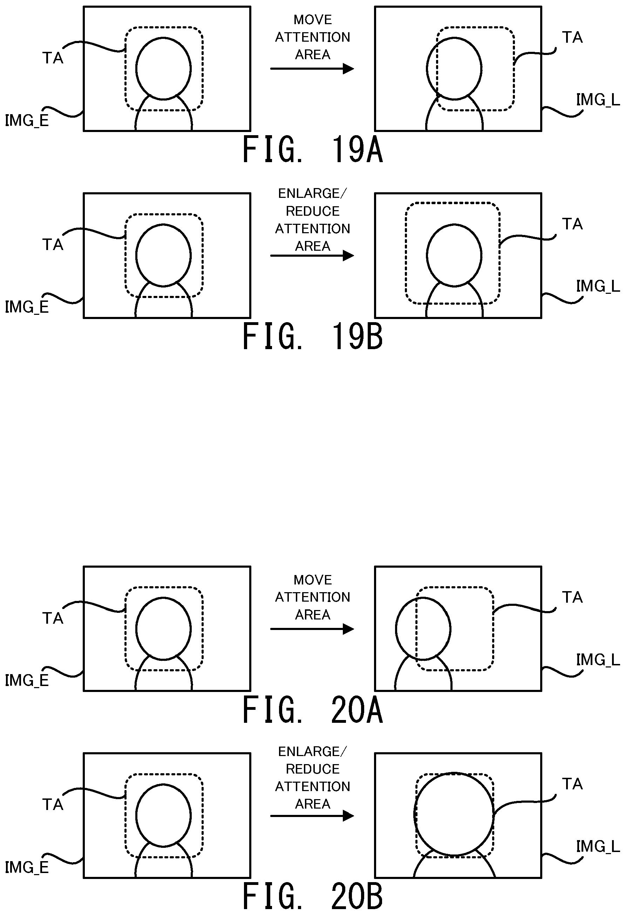

The image generation unit 412 may change the positional relation between the attention area TA and the face of the sample person, by changing properties of the attention area TA in the extracted image IMG_E. The properties of the attention area TA may include the position of the attention area TA. In this instance, as illustrated in FIG. 19A, the image generation unit 412 may change the position of the attention area TA in the extracted image IMG_E, thereby to change the positional relation between the attention area TA and the face of the sample person. That is, the image generation unit 412 may change the positional relation between the attention area TA and the face of the sample person by moving the attention area TA in the extracted image IMG_E. Furthermore, the properties of the attention area TA may include a size of the attention area TA. In this case, as illustrated in FIG. 19B, the image generation unit 412 may change the positional relation between the attention area TA and the face of the sample person by changing the size of the attention area TA in the extracted image IMG_E. That is, the image generation unit 412 may change the positional relation between the attention area TA and the face of the sample person by enlarging or reducing the attention area TA in the extracted image IMG_E.

The image generation unit 412 may change the positional relation between the attention area TA and the face of the sample person by changing properties of the extracted image IMG_E in which the attention area TA is set. The properties of the extracted image IMG_E may include a position of the extracted image IMG_E (e.g., a position for the attention area TA). In this case, as illustrated in FIG. 20A, the image generation unit 412 may change the position of the extracted image IMG_E for the attention area TA, thereby to change the positional relation between the attention area TA and the face of the sample person. That is, the image generation unit 412 may change the positional relation between the attention area TA and the face of the sample person by moving (e.g., translating) the extracted image IMG_E with respect to the attention area TA. Furthermore, the properties of the extracted image IMG_E may include a size of the extracted image IMG_E. In this instance, as illustrated in FIG. 20B, the image generation unit 412 may change the positional relation between the attention area TA and the face of the sampler by changing the size of the extracted image IMG_E. That is, the image generation unit 412 may change the positional relation between the attention area TA and the face of the sample person by enlarging or reducing the extracted image IMG_E.

Referring back to FIG. 17, thereafter, the engine generation unit 413 generates the decision engine ENG by using the plurality of learning images IMG_L generated in the step S42 (step S43). That is, the engine generation unit 413 generates the decision engine ENG by performing machine learning using the plurality of learning images IMG_L generated in the step S42 (step S43). Specifically, the engine generation unit 413 inputs each of the plurality of learning images IMG_L generated in the step S42, to the decision engine ENG. As a result, the decision engine ENG outputs a result of determination of whether or not the sample person included in the learning image IMG_L is a living body. After that, the engine generation unit 413 updates a parameter of the decision engine ENG by using a loss function based on an error between the determination result of the decision engine ENG and the correct answer label 423 corresponding to each learning image IMG_L. Typically, the engine generation unit 413 updates the parameter of the decision engine ENG so as to reduce (preferably, minimize) the error between the determination result of the decision engine ENG and the correct answer label 423 corresponding to each learning image IMG_L. Alternatively, since the decision engine ENG performs so-called binary classification, the engine generation unit 413 may update the parameter of the decision engine ENG by using an index value based on a confusion matrix (e.g., at least one of Accuracy, Recall, Specificity, Precision, and F-measure). Consequently, the decision engine ENG is generated.

### (4-3) Technical Effect

As described above, in the fourth example embodiment, the engine generation apparatus 4 generates the learning image IMG_L from the extracted image IMG_E on the basis of the imaging environment in which the thermal camera 2 images the target person. In this case, the learning image IMG_L reflects information about the imaging environment in which the thermal camera 2 images the target person. Therefore, the engine generation apparatus 4 is allowed to generate the decision engine ENG that reflects the information about the imaging environment, by performing machine learning using the learning image IMG_L that reflects the information about the imaging environment. For example, the engine generation apparatus 4 may perform machine learning using the learning image IMG_L that reflects information about a particular imaging environment, thereby to generate the decision engine ENG for determining whether or not the target person is a living body by using the thermal image IMG_T generated by the thermal camera 2 imaging the target person under the particular imaging environment. Consequently, by using the decision engine ENG that reflects the information about the particular imaging environment, as compared with a case of using the decision engine ENG that does not reflect the information about the particular imaging environment, the authentication apparatus 3 is allowed to determine whether or not the target person is a living body, with high accuracy, from the thermal image IMG_T generated by the thermal camera 2 imaging the target person under the particular imaging environment. That is, the engine generation apparatus 4 is capable of determining the decision engine ENG that is configured to determine whether or not the target person is a living body with high accuracy.

### (4-4) Modified Example

The engine generation apparatus 4 may generate a plurality of different decision engines ENG, and the authentication apparatus 3 may select one of the plurality of decision engines ENG and may use the selected one decision engine ENG to determine whether or not the target person is a living body. In this instance, the authentication apparatus 3 may change the decision engine ENG used to determine whether or not the target person is a living body, in an authentication period in which the authentication operation is performed.

As an example, at least one of the deviation between the center of the attention area TA and the center of the face of the target person in the thermal image IMG_T (hereinafter simply referred to as a "deviation between the attention area TA and the face") and a direction of the deviation between the center of the attention area TA and the center of the face of the target person in the thermal image IMG_T (hereinafter simply referred to as a "direction of the deviation between the attention area TA and the face") may vary depending on the imaging environment, as described above. In this instance, the engine generation apparatus 4 may generate a plurality of types of learning images IMG_L in which at least one of the deviation between the attention area TA and the face, and the direction of the deviation between the attention area TA and the face, is different, and may generate each of the plurality of decision engines ENG by using the plurality of types of learning images IMG_L. For example, the engine generation apparatus 4 (i) may generate a first learning image IMG_L in which the deviation between the attention area TA and the face is in a first range and in which the direction of the deviation between the attention area TA and the face is a first direction, by changing the positional relation between the attention area TA and the face in a first change aspect, and (ii) may generate a second learning image IMG_L in which the deviation between the attention area TA and the face is in a second range that is different from the first range and/or in which the direction of the deviation between the attention area TA and the face is a second direction that is different from the first direction, by changing the positional relation between the attention area TA and the face in a second change aspect that is different from the first change aspect. Thereafter, the engine generation apparatus 4 may generate a first decision engine ENG by using the first learning image IMG_L, and may generate a second decision engine ENG by using the second learning image IMG_L.

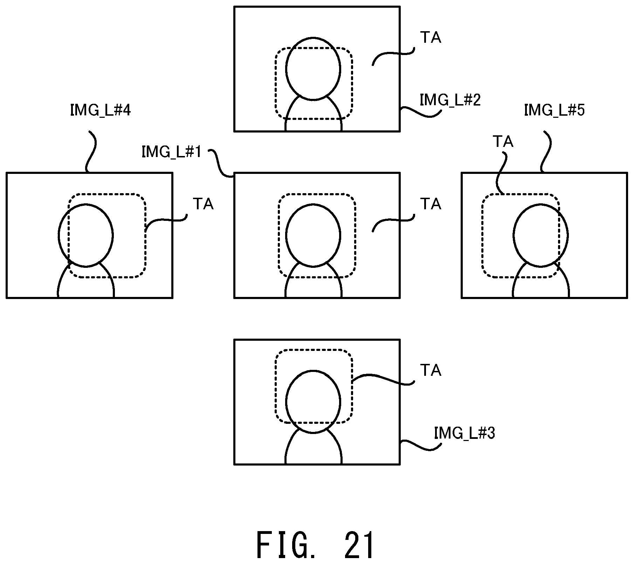

As an example, the engine generation apparatus 4 may generate, as illustrated in FIG. 21, a learning area IMG_L#1 in which the face is not shifted with respect to the target are TA, a learning image IMG_L#2 in which the face is shifted upward with respect to the attention area TA, a learning image IMG_L#3 in which the face is shifted downward with respect to the attention area TA, a learning image IMG_L#4 in which the face is shifted to the left with respect to the attention area TA, and a learning apparatus IMG_L#5 in which the face is shifted to the right with respect to the attention area TA. The engine generation apparatus 4 may then generate a decision engine image ENG#1 by using the learning image IMG_L#1, may generate a decision engine ENG#2 by using the learning image IMG_L#2, may generate a decision engine ENG#3 by using the learning image IMG_L#3, may generate a decision engine ENG#4 by using the learning image IMG_L#4, and may generate a decision engine ENG#5 by using the learning IMG_L#5. The decision engine ENG#1 makes it possible to determine whether or not the target person is a living body with higher accuracy, by using the thermal image IMG_T in which the face is not shifted with respect to the attention area TA, as compared with the decision engines ENG#2 to ENG#5. The decision engine ENG#2 makes it possible to determine whether or not the target person is a living body with higher accuracy, by using the thermal image IMG_T in which the face is shifted upward with respect to the attention area TA, as compared with the decision engines ENG#1, ENG#3 to ENG#5. The decision engine ENG#3 makes it possible to determine whether or not the target person is a living body with higher accuracy, by using the thermal image IMG_T in which the face is shifted downward with respect to the attention area TA, as compared with the decision engines ENG#1 to ENG#2, and ENG#4 to ENG#5. The decision engine ENG#4 makes it possible to determine whether or not the target person is a living body with higher accuracy, by using the thermal image IMG_T in which the face is shifted to the left with respect to the attention area TA, as compared with the decision engines ENG#1 to ENG#3, and ENG#5. The decision engine ENG#5 makes it possible to determine whether or not the target person is a living body with higher accuracy, by using the thermal image IMG_T n which the face is shifted to the right with respect to the attention area TA, as compared with the decision engines ENG#1 to ENG#4.

In a case where such a decision engine ENG is generated, the authentication apparatus 3 may estimate at least one of the deviation between the attention area TA and the face, and the direction of the deviation between the attention area TA and the face, on the bawsis of the imaging environment in the authentication period, and may select, from among the plurality of decision engines ENG, one decision engine ENG corresponding to the estimated at least one of the deviation and the direction of the deviation. That is, the authentication apparatus 3 may select the decision engine ENG generated by using the learning image IMG_L corresponding to the estimated at least one of the deviation and the direction of the deviation. Thereafter, the authentication apparatus 3 may determine whether or not the target person is a living body by using the selected decision engine ENG. Consequently, the authentication apparatus 3 is allowed to determine whether or not the target person is a living body with higher accuracy, as compared with a case where it is hardly possible to select the decision engine ENG to be used by the authentication apparatus.

The imaging environment used to estimate at least one of the deviation between the attention area TA and the face, and the direction of the deviation between the attention area TA and the face, may include the positional relation between the visible camera 1 and the target person (typically, the distance between the visible camera 1 and the target person) in the timing when the visible camera 1 images the target person (i.e., at the authentication time ta described above), for example. The imaging environment used to estimate at least one of the deviation between the attention area TA and the face, and the direction of the deviation between the attention area TA and the face, may include the positional relation between the visible camera 1 and the thermal camera 2. In this case, the authentication apparatus 3 may estimate at least one of the deviation between the attention area TA and the face, and the direction of the deviation between the attention area TA and the face, by using information (e.g., at least one of a table, an arithmetic expression, a function, a graph, etc.) that determines a relation between the positional relation between the visible camera 1 and the target person and the positional relation between the visible camera 1 and the thermal camera 2; and at least one of the deviation between the attention area TA and the face, and the direction of the deviation between the attention area TA and the face. In a case where the positional relation between the visible camera 1 and the target person is used to estimate at least one of the deviation between the attention area TA and the face, and the direction of the deviation between the attention area TA and the face, the authentication system SYS4 may include a measurement apparatus for measuring the positional relation between the visible camera 1 and the target person (typically, the distance between the visible camera 1 and the target person).

Even the engine generation apparatus 2000 in the second example embodiment, may adopt the same constituent elements as those of the modified example described above.

### (5) Supplementary Notes

With respect to the example embodiment described above, the following Supplementary Notes are further disclosed.

### [Supplementary Note 1]

An authentication apparatus including:
an authentication unit that authenticates a target person, by using a person image generated by a visible camera imaging the target person at a first time; and
a determination unit that determines whether or not the target person is a living body, by using a plurality of thermal images generated by a thermal camera imaging the target person at a second time closest the first time, and a third time before and / or after the second time, of a plurality of times when the thermal camera images the target person.

### [Supplementary Note 2]

The authentication apparatus according to Supplementary Note 1, wherein the determination unit identifies an attention area to be noted to determine whether or not the target person is a living body, in at least one of the plurality of thermal images on the basis of the person image, adjusts a position of the attention area in the at least one thermal image on the basis of the at least one thermal image, and determines whether or not the target person is a living body on the basis of a temperature distribution in the attention area whose position is adjusted.

### [Supplementary Note 3]

The authentication apparatus according to Supplementary Note 1 or 2, wherein the determination unit identifies an attention area to be noted to determine whether or not the target person is a living body, in each of the plurality of thermal images on the basis of the person image, selects at least one thermal image in which an attention part of the target person to be noted to determine whether or not the target person is a living body, is included in the attention area, from among the plurality of thermal images on the basis of the plurality of thermal images, and determines whether or not the target person is a living body on the basis of the selected at least one thermal image.

### [Supplementary Note 4]

The authentication apparatus according to any one of Supplementary Notes 1 to 3, wherein
the determination unit determines whether or not the target person is a living body, by using a decision engine capable of determining whether or not the target person is a living body from the plurality of thermal images, and
the decision engine is generated by a learning operation including: a first operation of extracting at least one sample image as an extracted image from a learning data set including a plurality of sample images in which an attention area is set, the attention area indicating a body surface temperature distribution of a sample person, the attention area being to be noted to determine whether or not the sample person is a living body; a second operation of generating a learning image by changing a positional relation between the attention area set in the extracted image and an attention part of the sample person to be noted to determine whether or not the sample person is a living body, on the basis of an imaging environment in which the visible camera and the thermal camera image the target person; and a third operation of performing machine learning using the learning image.

### [Supplementary Note 5]

The authentication apparatus according to Supplementary Note 4, wherein the second operation changes the positional relation between the attention area and the attention part, by changing at least one of a position and a size of the attention area in the extracted image, and a position and a size of the extracted image.

### [Supplementary Note 6]

The authentication apparatus according to Supplementary Note 4 or 5, wherein the determination unit selects one decision engine on the basis of the imaging environment, from among a plurality of decision engines respectively generated by a plurality of the second operations in which change aspects of the positional relation are respectively different, and determines whether or not the target person is a living body by using the selected one decision engine.

### [Supplementary Note 7]

The authentication apparatus according to Supplementary Note 6, wherein the imaging environment includes a positional relation between the target person and the visible camera at the first time, and a positional relation between the visible camera and the thermal camera.

### [Supplementary Note 8]

An engine generation apparatus that generates a decision engine for determining whether or not a target person is a living body by using a thermal image generated by a thermal camera imaging the target person, the engine generation apparatus including:
an extraction unit that extracts at least one sample image as an extracted image from a learning data set including a plurality of sample images in which an attention area is set, the attention area indicating a body surface temperature distribution of a sample person, the attention area being to be noted to determine whether or not the sample person is a living body;
an image generation unit that generates a learning image by changing a positional relation between the attention area set in the extracted image and an attention part of the sample person to be noted to determine whether or not the sample person is a living body, on the basis of an imaging environment in which the thermal camera images the target person; and
an engine generation unit that generates the decision engine by performing machine learning using the learning image.

### [Supplementary Note 9]

The engine generation apparatus according to Supplementary Note 8, wherein the image generation unit changes the positional relation between the attention area and the attention part, by changing at least one of a position and a size of the attention area in the extracted image, and a position and a size of the extracted image.

### [Supplementary Note 10]

The engine generation apparatus according to Supplementary Note 8 or 9, wherein
the image generation unit generates a first learning image by changing the positional relation between the attention area and the attention part set in the extracted image in a first change aspect, and generates a second learning image by changing the positional relation between the attention area and the attention part set in the extracted image in a second change aspect that is different from the first change aspect, and
the engine generation unit generates a first decision engine by performing machine learning using the first learning image, and generates a second decision engine by performing machine learning using the second learning image.
position and a size of the extracted image.

### [Supplementary Note 11]

An authentication method including:
authenticating a target person, by using a person image generated by a visible camera imaging the target person at a first time; and
determining whether or not the target person is a living body, by using a plurality of thermal images generated by a thermal camera imaging the target person at a second time closest the first time, and a third time before and / or after the second time, of a plurality of times when the thermal camera images the target person.

### [Supplementary Note 12]

An engine generation method that generates a decision engine for determining whether or not a target person is a living body by using a thermal image generated by a thermal camera imaging the target person, the engine generation method including:
extracting at least one sample image as an extracted image from a learning data set including a plurality of sample images in which an attention area is set, the attention area indicating a body surface temperature distribution of a sample person, the attention area being to be noted to determine whether or not the sample person is a living body;
generating a learning image by changing a positional relation between the attention area set in the extracted image and an attention part of the sample person to be noted to determine whether or not the sample person is a living body, on the basis of an imaging environment in which the thermal camera images the target person; and
generating the decision engine by performing machine learning using the learning image.

### [Supplementary Note 13]

A recording medium on which a computer program that allows a computer to execute an authentication method is recorded, the authentication method including:
authenticating a target person, by using a person image generated by a visible camera imaging the target person at a first time; and
determining whether or not the target person is a living body, by using a plurality of thermal images generated by a thermal camera imaging the target person at a second time closest the first time, and a third time before and / or after the second time, of a plurality of times when the thermal camera images the target person.

### [Supplementary Note 14]

A recording medium on which recorded is a computer program that allows a computer to execute an engine generation method that generates a decision engine for determining whether or not a target person is a living body by using a thermal image generated by a thermal camera imaging the target person, the engine generation method including:
extracting at least one sample image as an extracted image from a learning data set including a plurality of sample images in which an attention area is set, the attention area indicating a body surface temperature distribution of a sample person, the attention area being to be noted to determine whether or not the sample person is a living body;
generating a learning image by changing a positional relation between the attention area set in the extracted image and an attention part of the sample person to be noted to determine whether or not the sample person is a living body, on the basis of an imaging environment in which the thermal camera images the target person; and
generating the decision engine by performing machine learning using the learning image.

At least a part of the constituent components of each of the example embodiments described above can be combined with at least another part of the constituent components of each of the example embodiments described above, as appropriate. A part of the constituent components of each of the example embodiments described above may not be used. Furthermore, to the extent permitted by law, all the references (e.g., publications) cited in this disclosure are incorporated by reference as a part of the description of this disclosure.

This disclosure is allowed to be changed, if desired, without departing from the essence or spirit of this disclosure which can be read from the claims and the entire identification. An authentication apparatus, an engine generation apparatus, an authentication method, an engine generation method, a computer program and a recording medium with such changes are also intended to be within the technical scope of this disclosure.

### Description of Reference Codes

SYS3, SYS4 Authentication Sys.
1 Visible camera
2 Thermal camera
3 Authentication apparatus
31 Arithmetic apparatus
311 Authentication unit
312 Biometric determination unit
313 Entry/exit management unit
32 Storage apparatus
321 Registrant DB
322 Registered body surface temperature distribution DB
4 Engine generation apparatus
41 Arithmetic apparatus
411 Image extraction unit
412 Image generation unit
413 Engine generation unit
42 Storage apparatus
420 Learning data set
421 Unit data
422 Attention area information
423 Correct answer label
1000 Authentication apparatus
1001 Authentication unit
1002 Determination unit
2000 Engine generation apparatus
2001 Extraction unit
2002 Image generation unit
2003 Engine generation unit
IMG_P Person image
IMG_T Thermal image
IMG_S Sample image
IMG_E Extracted image
IMG_L Learning image
FA Face area
TA Attention area
ENG Decision engine

## Claims

1. An authentication apparatus comprising:
an authentication unit that authenticates a target person, by using a person image generated by a visible camera imaging the target person at a first time; and
a determination unit that determines whether or not the target person is a living body, by using a plurality of thermal images generated by a thermal camera imaging the target person at a second time closest the first time, and a third time before and / or after the second time, of a plurality of times when the thermal camera images the target person.

2. The authentication apparatus according to claim 1, wherein the determination unit identifies an attention area to be noted to determine whether or not the target person is a living body, in at least one of the plurality of thermal images on the basis of the person image, adjusts a position of the attention area in the at least one thermal image on the basis of the at least one thermal image, and determines whether or not the target person is a living body on the basis of a temperature distribution in the attention area whose position is adjusted.

3. The authentication apparatus according to claim 1 or 2, wherein the determination unit identifies an attention area to be noted to determine whether or not the target person is a living body, in each of the plurality of thermal images on the basis of the person image, selects at least one thermal image in which an attention part of the target person to be noted to determine whether or not the target person is a living body, is included in the attention area, from among the plurality of thermal images on the basis of the plurality of thermal images, and determines whether or not the target person is a living body on the basis of the selected at least one thermal image.

4. The authentication apparatus according to any one of claims 1 to 3, wherein
the determination unit determines whether or not the target person is a living body, by using a decision engine capable of determining whether or not the target person is a living body from the plurality of thermal images, and
the decision engine is generated by a learning operation including: a first operation of extracting at least one sample image as an extracted image from a learning data set including a plurality of sample images in which an attention area is set, the attention area indicating a body surface temperature distribution of a sample person, the attention area being to be noted to determine whether or not the sample person is a living body; a second operation of generating a learning image by changing a positional relation between the attention area set in the extracted image and an attention part of the sample person to be noted to determine whether or not the sample person is a living body, on the basis of an imaging environment in which the visible camera and the thermal camera image the target person; and a third operation of performing machine learning using the learning image.

5. The authentication apparatus according to claim 4, wherein the second operation changes the positional relation between the attention area and the attention part, by changing at least one of a position and a size of the attention area in the extracted image, and a position and a size of the extracted image.

6. The authentication apparatus according to claim 4 or 5, wherein the determination unit selects one decision engine on the basis of the imaging environment, from among a plurality of decision engines respectively generated by a plurality of the second operations in which change aspects of the positional relation are respectively different, and determines whether or not the target person is a living body by using the selected one decision engine.

7. The authentication apparatus according to claim 6, wherein the imaging environment includes a positional relation between the target person and the visible camera at the first time, and a positional relation between the visible camera and the thermal camera.

8. An engine generation apparatus that generates a decision engine for determining whether or not a target person is a living body by using a thermal image generated by a thermal camera imaging the target person, the engine generation apparatus comprising:
an extraction unit that extracts at least one sample image as an extracted image from a learning data set including a plurality of sample images in which an attention area is set, the attention area indicating a body surface temperature distribution of a sample person, the attention area being to be noted to determine whether or not the sample person is a living body;
an image generation unit that generates a learning image by changing a positional relation between the attention area set in the extracted image and an attention part of the sample person to be noted to determine whether or not the sample person is a living body, on the basis of an imaging environment in which the thermal camera images the target person; and
an engine generation unit that generates the decision engine by performing machine learning using the learning image.

9. The engine generation apparatus according to claim 8, wherein the image generation unit changes the positional relation between the attention area and the attention part, by changing at least one of a position and a size of the attention area in the extracted image, and a position and a size of the extracted image.

10. The engine generation apparatus according to claim 8 or 9, wherein
the image generation unit generates a first learning image by changing the positional relation between the attention area and the attention part set in the extracted image in a first change aspect, and generates a second learning image by changing the positional relation between the attention area and the attention part set in the extracted image in a second change aspect that is different from the first change aspect, and
the engine generation unit generates a first decision engine by performing machine learning using the first learning image, and generates a second decision engine by performing machine learning using the second learning image.

11. An authentication method comprising:
authenticating a target person, by using a person image generated by a visible camera imaging the target person at a first time; and
determining whether or not the target person is a living body, by using a plurality of thermal images generated by a thermal camera imaging the target person at a second time closest the first time, and a third time before and / or after the second time, of a plurality of times when the thermal camera images the target person.

12. An engine generation method that generates a decision engine for determining whether or not a target person is a living body by using a thermal image generated by a thermal camera imaging the target person, the engine generation method comprising:
extracting at least one sample image as an extracted image from a learning data set including a plurality of sample images in which an attention area is set, the attention area indicating a body surface temperature distribution of a sample person, the attention area being to be noted to determine whether or not the sample person is a living body;
generating a learning image by changing a positional relation between the attention area set in the extracted image and an attention part of the sample person to be noted to determine whether or not the sample person is a living body, on the basis of an imaging environment in which the thermal camera images the target person; and
generating the decision engine by performing machine learning using the learning image.

13. A recording medium on which a computer program that allows a computer to execute an authentication method is recorded, the authentication method including:
authenticating a target person, by using a person image generated by a visible camera imaging the target person at a first time; and
determining whether or not the target person is a living body, by using a plurality of thermal images generated by a thermal camera imaging the target person at a second time closest the first time, and a third time before and / or after the second time, of a plurality of times when the thermal camera images the target person.

14. A recording medium on which recorded is a computer program that allows a computer to execute an engine generation method that generates a decision engine for determining whether or not a target person is a living body by using a thermal image generated by a thermal camera imaging the target person, the engine generation method including:
extracting at least one sample image as an extracted image from a learning data set including a plurality of sample images in which an attention area is set, the attention area indicating a body surface temperature distribution of a sample person, the attention area being to be noted to determine whether or not the sample person is a living body;
generating a learning image by changing a positional relation between the attention area set in the extracted image and an attention part of the sample person to be noted to determine whether or not the sample person is a living body, on the basis of an imaging environment in which the thermal camera images the target person; and
generating the decision engine by performing machine learning using the learning image.
